# EUROPÄISCHE PATENTANMELDUNG

(11) **EP 3 387 900 A1**
(43) Veröffentlichungstag der Anmeldung: **17.10.2018**
(21) Anmeldenummer: 18166881.5
(22) Anmeldetag: 11.04.2018
(51) Int. Cl.: A01K 1/02, B60R 7/04

(54) **TRANSPORTGUTHALTEVORRICHTUNG FÜR EINEN INNENRAUM EINES KRAFTFAHRZEUGS**

(30) Priorität: 13.04.2017 DE 102017003646
(71) Anmelder: DOGSTYLER Soest GmbH, 59494 Soest (DE)
(72) Erfinder: Zachari, Klaus, 59494 Soest (DE)
(74) Vertreter: Vossius & Partner Patentanwälte Rechtsanwälte mbB

(57) **Zusammenfassung**

Die Erfindung betrifft eine komfortable und sichere Transportguthaltevorrichtung (16, 100) für den Transport eines Transportguts, insbesondere einer Transportvorrichtung (38, 84) für Tiere, in einem Innenraum eines Kraftfahrzeugs, mit einer Rahmenkonstruktion (18, 66), wobei an einer Rückseite (22) an der Rahmenkonstruktion (18, 66) wenigstens ein Befestigungselement (26) angeordnet ist, welches dazu ausgebildet ist, die Transportguthaltevorrichtung (16, 100) lösbar an einem Fahrzeugsitz des Kraftfahrzeugs zu befestigen, wobei das wenigstens eine Befestigungselement (26) mit der Rahmenkonstruktion (18, 66) mittels wenigstens eines Gelenks (44) verbunden ist. Weiterhin betrifft die Erfindung ein Tiertransportsystem für ein Kraftfahrzeug mit einer Transportguthaltevorrichtung (16, 100) und einer darauf angeordneten Transportvorrichtung (38, 84) für Tiere, insbesondere einer Tiertransportbox (38, 84).

## Beschreibung

Die Erfindung betrifft eine Transportguthaltevorrichtung für den Transport eines Transportguts, insbesondere einer Transportvorrichtung für Tiere, in einem Innenraum eines Kraftfahrzeugs. Weiterhin betrifft die Erfindung ein Transportsystem für ein Kraftfahrzeug.

Mit Kraftfahrzeugen wird häufig, neben Passagieren, auch Transportgut transportiert. Zu einem solchen Transportgut können auch Lebewesen wie beispielsweise Haustiere gehören. Während für nicht lebendiges Transportgut, wie beispielsweise Gepäck, in einem Kraftfahrzeug üblicherweise ein Kofferraum zur Verfügung steht, ist dieser für den Transport von Lebewesen eher ungeeignet. Insbesondere die Dunkelheit im Kofferraum und eine mangelnde Luftversorgung können für ein Haustier eine starke Belastung darstellen. Aus diesem Grund wird häufig ein Transport von Haustieren im Innenraum des Kraftfahrzeugs bevorzugt, beispielsweise auf den Rücksitzen.

Dabei kann es sinnvoll sein, eine Bewegungsfreiheit des Haustieres einzuschränken, damit es nicht zu dem Fahrer des Kraftfahrzeugs gelangen kann und diesen dann gegebenenfalls stört. Ebenso kann es sinnvoll sein, das Haustier zu sichern, sodass es im Falle eines Unfalls nicht frei im Innenraum des Kraftfahrzeugs herumgeschleudert werden kann.

Die DE 20 2015 003 208 U1 zeigt beispielsweise eine Transportguthalterung für den Innenraum von Kraftfahrzeugen, welche ein Bodenelement mit einer oberseitigen, überwiegend planen Ablagefläche und ein seitlich davon abstehendes Befestigungselement aufweist. Diese Transportguthalterung ermöglicht den sicheren Transport von Tieren in einem Innenraum eines Kraftfahrzeugs, ebenso wie von anderem Transportgut. Insbesondere ermöglicht diese Transportguthalterung das sichere Befestigen einer Transportbox für Haustiere im Innenraum des Kraftfahrzeugs, um so auch gegebenenfalls vorhandenen gesetzlichen Vorschriften gerecht werden zu können.

Aufgabe der vorliegenden Erfindung ist es, eine Transportguthaltevorrichtung für den Transport eines Transportguts, insbesondere einer Transportvorrichtung für Tiere, in einem Innenraum eines Kraftfahrzeugs zu schaffen, welche besonders sicher und komfortabel ist. Ebenso ist es Aufgabe der vorliegenden Erfindung, ein Tiertransportsystem für ein Kraftfahrzeug zu schaffen, welches besonders sicher und komfortabel ist.

Diese Aufgaben werden erfindungsgemäß durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Transportguthaltevorrichtung als vorteilhafte Ausgestaltungen des Tiertransportsystems und umgekehrt anzusehen sind.

Ein erster Aspekt der Erfindung betrifft eine Transportguthaltevorrichtung für den Transport eines Transportguts, insbesondere einer Transportvorrichtung für Tiere, in einem Innenraum eines Kraftfahrzeugs.

Erfindungsgemäß ist es dabei vorgesehen, dass die Transportguthaltevorrichtung eine Rahmenkonstruktion umfasst und eine Vorderseite und eine dieser gegenüberliegende Rückseite aufweist, welche eine Längsrichtung definieren. An der Rückseite ist an der Rahmenkonstruktion wenigstens ein Befestigungselement angeordnet, welches dazu ausgebildet ist, die Transportguthaltevorrichtung lösbar an einem Fahrzeugsitz des Kraftfahrzeugs zu befestigen, wenn die Transportguthaltevorrichtung auf dem Fahrzeugsitz angeordnet ist. Die Transportguthaltevorrichtung weist ferner wenigstens ein eine Bodenfläche ausbildendes Stützelement auf, welches an der Rahmenkonstruktion, bevorzugt lösbar, befestigt ist. Ferner weist die Transportguthaltevorrichtung an ihrer Vorderseite wenigstens ein eine Längshaltefläche ausbildendes Längshalteelement auf, welches an der Rahmenkonstruktion, bevorzugt lösbar, befestigt ist. Dabei ist das wenigstens eine Befestigungselement mit der Rahmenkonstruktion mittels wenigstens eines Gelenks verbunden.

Die Transportguthaltevorrichtung stellt so eine Bodenfläche zur Verfügung, auf welcher Transportgut im Innenraum des Kraftfahrzeugs sicher abgestellt werden kann. Dabei wird eine Sitzfläche des Fahrzeugsitzes vor dem Transportgut geschützt, insbesondere beispielsweise vor scharfen Kanten einer Tiertransportbox oder Krallen eines Tieres, welche beispielsweise eine Oberfläche der Sitzfläche zerkratzen und/oder anderweitig beschädigen könnte. Mittels der Längshaltefläche kann ein Verrutschen von Transportgut auf der Bodenfläche in Längsrichtung begrenzt werden, welche insbesondere einer Fahrzeuglängsrichtung entsprechen kann. Dadurch kann beispielsweise das Transportgut bei einem Bremsen in Verzögerungsrichtung abgestützt werden.

Durch das Verbinden des Befestigungselements mit der Rahmenkonstruktion mittels eines Gelenkes kann die Transportguthaltevorrichtung unabhängig von einer Neigung und/oder Position eines korrespondierenden Befestigungselements an dem Fahrzeugsitz einfach und damit komfortabel an diesem befestigt werden. Zudem ermöglicht das Gelenk einen besonders einfachen Neigungsausgleich der Bodenfläche in Einbaulage. Dadurch kann beispielsweise die Bodenfläche auch bei einer Anordnung auf einer schrägen Sitzfläche horizontal ausgerichtet werden. Es hat sich gezeigt, dass es für Tiere besonders komfortabel ist, wenn diese auf einer ebenen und/oder horizontalen Fläche transportiert werden. Gegenüber einer geneigten Fläche kann ein Haustier so während eines Transports im Innenraum wesentlich ruhiger sein. Dies erhöht ebenfalls die Sicherheit, da ein ruhiges Tier den Fahrer des Kraftfahrzeugs weniger ablenkt als ein unruhiges und/oder sich gegebenenfalls bewegendes Tier.

Vorzugsweise kann die Transportguthaltevorrichtung mehrere Befestigungselemente mit jeweils zugeordneten Gelenken oder auch mehrere Befestigungselemente je Gelenk umfassen. Beispielsweise kann die Transportguthaltevorrichtung zwei Befestigungselemente mit jeweils einem zugeordneten Gelenk, also zwei Gelenken, umfassen. Alternativ kann die Transportguthaltevorrichtung aber auch beispielsweise zwei Befestigungselemente umfassen, welche mit der Rahmenkonstruktion mittels eines gemeinsamen Gelenkes verbunden sind. Mehrere Gelenke ermöglichen dabei eine individuelle Ausrichtung der jeweiligen Befestigungselemente zu der Rahmenkonstruktion und somit eine besonders einfache Befestigung der Transportguthaltevorrichtung und einen besonders einfachen Neigungsausgleich. Ein gemeinsames Gelenk für mehrere Befestigungselemente ist besonders kostengünstig und schnell einstellbar. Es können auch mehrere Gelenke pro Befestigungselement vorgesehen sein, um einen Neigungsausgleich um eine Vielzahl von Achsen zu ermöglichen. Die jeweiligen Gelenke können arretierbar sein, wodurch eine Ausrichtung der Transportguthaltervorrichtung festgelegt werden kann und wodurch ein wiederholter Einbau und Ausbau vereinfacht werden kann. Die jeweiligen Gelenke können auch frei beweglich sein, wodurch die Gelenke kostengünstiger sind und sich jeweilige Gelenkstellungen durch auf die Transportguthaltevorrichtung wirkende Kräfte selbst einstellen können. So kann beispielsweise ein automatisches Aufliegen der Rahmenkonstruktion auf der Sitzfläche unter Einwirkung der Schwerkraft nach Befestigen der Befestigungselemente an dem Fahrzeugsitz ermöglicht werden.

Die Vorderseite und die gegenüberliegende Rückseite können die Längsrichtung durch eine diese schneidende Achse definieren. Diese Achse kann insbesondere in einer Symmetrieebene der Transportguthaltevorrichtung liegen. Insbesondere kann eine Längsachse, welche der Längsrichtung entspricht, in den beiden Mitten in Querrichtung der Vorderseite und der Rückseite der Transportguthaltevorrichtung liegen. Vorzugsweise entspricht die Längsrichtung in Einbaulage der Transportguthaltevorrichtung im Wesentlichen der Längsrichtung des Kraftfahrzeugs. Die Bodenfläche kann das Transportgut in eine Hochrichtung abstützen, wobei die Hochrichtung bei einem Neigungsausgleich der Bodenfläche vorzugsweise vertikal ist. In diesem Fall ist eine ebene Bodenfläche in Einbaulage vorzugsweise horizontal ausgerichtet ist. Die Hochrichtung kann in Einbaulage der Transportguthaltevorrichtung im Wesentlichen einer Fahrzeughochrichtung des Kraftfahrzeugs entsprechen. Die Bodenfläche kann in Einbaulage bei einem Neigungsausgleich mittels des Gelenks im Wesentlichen in einer horizontalen Ebene liegen, insbesondere wenn die Bodenfläche eben ist. Vorzugsweise kann in Einbaulage eine Richtung von der Rückseite zu der Vorderseite der Transportguthaltevorrichtung einer Vorwärtsfahrtrichtung entsprechen. Die Transportguthaltevorrichtung kann in einer Querrichtung, welche quer zur Längsrichtung ist, symmetrisch sein, wobei die Längsrichtung dann in dieser Symmetrieebene liegen kann. Vorzugsweise ist die Querrichtung orthogonal zur Längsrichtung. Insbesondere kann die Querrichtung in einer durch die Bodenfläche definierten Ebene quer zur Längsrichtung ausgerichtet sein. Vorzugsweise entspricht die Querrichtung in Einbaulage der Transportguthaltevorrichtung im Wesentlichen einer Fahrzeugguerrichtung.

Vorzugsweise sind sowohl das Stützelement als auch die Rahmenkonstruktion in Einbaulage der Transportguthaltevorrichtung oberhalb einer Sitzfläche des Fahrzeugs angeordnet. Die Rahmenkonstruktion kann dabei so ausgebildet sein, dass eine Beschädigung der Sitzfläche des Fahrzeugsitzes bei einer Auflage darauf vermieden wird. Zu diesem Zweck kann beispielsweise ein flexibles Element, wie beispielsweise ein mit Kugeln gefülltes Sackelement, unter der Rahmenkonstruktion angeordnet sein. Alternativ kann das flexible Element beispielsweise auch als Kaltschaum-Kissen mit Kunstlederbezug oder Lederbezug ausgebildet sein, wodurch die Transportguthaltevorrichtung dort besonders robust ist. Dieses flexible Element ermöglicht dann auch eine Anpassung an eine Sitzkontur und damit einen besonders einfachen Neigungsausgleich und eine besonders gute Abstützung der Transportguthaltevorrichtung an der darunter liegenden Sitzfläche. Alternativ ist das Gelenk bevorzugt arretierbar. Dann ist es auch möglich, die Transportguthaltevorrichtung so an dem Fahrzeugsitz zu befestigen, sodass dieses die Sitzfläche des Fahrzeugsitzes nicht oder nur in bestimmten Bereichen berührt.

Die Bodenfläche ist vorzugsweise plan. Insbesondere kann das Stützelement als ebene Platte ausgebildet sein. Die Bodenfläche kann eine Ebene zum Abstützen des Transportgutes von unten bilden. Gleiches gilt für die Längshaltefläche, auch diese kann beispielsweise plan, eben und/oder durch eine ebene Platte gebildet sein. Die Flächen der Transportguthaltevorrichtung können also vorzugsweise ebene Flächen sein. Die jeweiligen Flächen können dabei auch Raster, Löcher und Freiflächen mit umfassen. Beispielsweise kann das Stützelement und/oder das Längshaltelement als gelochte Platte oder Gatter zur Gewichtsreduktion ausgebildet sein. Die Fläche umfasst dann auch die so gebildeten Hohlräume, Freiräume und/oder Zwischenräume mit. Beispielsweise können die Bodenfläche und/oder die Längshaltefläche durch jeweilige Außenkanten und/oder jeweilige Außenkonturen definiert sein.

Jeweilige Stützelemente und Längshalteelemente können beispielsweise mit der Rahmenkonstruktion verschraubt oder verschweißt sein. Vorzugsweise ist die Rahmenkonstruktion aus Rohren und/oder Profilen gebildet, insbesondere aus metallischen Rohren und/oder metallischen Profilen. Jeweilige Stützelemente und/oder Längshalteelemente können beispielsweise als Holzplatten oder aus Verbundmaterial wie Alu-Dibond-Platten ausgebildet sein, welche für eine ästhetische Anmutung mit Leder und/oder Kunstleder bezogen und/oder eingefärbt, beispielsweise lackiert, sein können. Jeweilige Stützelemente und/oder Längshalteelemente aus Verbundwerkstoff können besonders leicht und robust sein. Insbesondere eine Alu-Dibond-Platte lässt sich einfach mit hochauflösenden Bilder in guter Farbqualität bedrucken. Jeweilige Stützelemente und/oder Längshalteelemente aus Holz sind besonders kostengünstig. Um den Komfort für ein Tier zu erhöhen, können die jeweiligen Elemente auch gepolstert sein, wodurch das Tier beim Transport besonders ruhig sein kann. Die Bodenfläche und die Längshaltefläche können auch durch wenigstens teilweise gemeinsame Elemente gebildet sein. Beispielsweise kann eine gebogene und/oder abgewinkelte Platte sowohl als Stützelement als auch als Längshalteelement dienen. Dadurch kann die Transportguthaltevorrichtung aus besonders wenig Elementen gebildet sein und zudem die Rahmenkonstruktion besonders einfach gestaltet sein.

Vorzugsweise ist in Einbaulage die Längshaltefläche gegenüberliegend zur Lehne des Fahrzeugsitzes angeordnet, an welchem die Transportguthaltevorrichtung befestigt ist. Bei normal angeordneten PKW-Sitzen weist dann die Vorderseite der Transportguthaltevorrichtung in Vorwärtsfahrtrichtung. Bei einem entgegen der Fahrtrichtung montierten Fahrzeugsitz kann dagegen dann entsprechend die Richtung von der Rückseite der Transportguthaltevorrichtung zu deren Vorderseite einer Rückwärtsfahrtrichtung entsprechen.

Die Transportguthaltevorrichtung ist besonders geeignet für den Transport von Haustieren wie Hunde oder Katzen, insbesondere in einer daran angeordneten und/oder lösbar daran befestigten Transportvorrichtung für Tiere, wie beispielsweise einer entsprechend ausgebildeten Transportbox. Die Transportguthaltevorrichtung ist aber auch geeignet für den Transport von anderen Gütern, wie zum Beispiel Getränkekisten. In diesem Fall wird also im Innenraum des Kraftfahrzeugs, welcher auch als Fahrgastraum bezeichnet werden kann, durch die Transportguthaltevorrichtung ein sicherer Transportplatz zur Verfügung gestellt, bei welchem die Innenausstattung zudem vor einer Beschädigung durch beispielsweise scharfkantige Güter geschützt ist. Die Transportguthaltevorrichtung kann nicht nur in Kraftfahrzeugen eingesetzt werden, sondern auch in anderen Fahrzeugen mit entsprechenden Fahrzeugsitzen, wie beispielsweise Flugzeugen, Schiffen und Eisenbahnen.

In weiterer vorteilhafter Ausgestaltung der Transportguthaltevorrichtung ist es vorgesehen, dass die Transportguthaltevorrichtung wenigstens ein eine Querhaltefläche ausbildendes Querhalteelement aufweist, welches an der Rahmenkonstruktion, bevorzugt lösbar, befestigt ist und/oder die Transportguthaltevorrichtung an ihrer Rückseite wenigstens ein eine zweite Längshaltefläche ausbildendes zweites Längshalteelement aufweist, welches an der Rahmenkonstruktion, bevorzugt lösbar, befestigt ist.

Die Querhaltefläche dient dabei zum Abstützen des Transportgutes in einer Querrichtung quer zur Längsrichtung. Insbesondere kann das Transportgut so auch sicher bei einer Kurvenfahrt des Kraftfahrzeugs gehalten werden. Hierfür kann die Querhaltefläche ein Verrutschen in Querrichtung verhindern und/oder begrenzen. Vorzugsweise umfasst die Transportguthaltevorrichtung dabei zwei Querhalteflächen an gegenüberliegenden Querseiten der Transportguthaltevorrichtung. Damit ist ein Abstützen in beide Querrichtungen möglich. Diese beiden Querhalteflächen können durch ein gemeinsames Querhalteelement oder durch verschiedene Querhalteelemente gebildet werden. Alternativ kann die Transportguthaltevorrichtung auch nur eine Querhaltefläche aufweisen, wobei das Transportgut dann beispielsweise durch eine gegenüberliegende Wand des Innenraums des Kraftfahrzeugs in die andere Querrichtung abgestützt werden kann. Dadurch kann Transportgut besonders einfach aus Richtung dieser Wand, welche beispielsweise durch eine Tür gebildet sein kann, auf der Transportguthaltevorrichtung angeordnet werden. Bei beidseitigen Querhalteflächen kann dagegen eine Seitenwand des Innenraums des Kraftfahrzeugs vor einer Beschädigung durch Verrutschen des Transportguts geschützt werden. In Einbaulage der Transportguthaltevorrichtung entspricht die Querrichtung vorzugsweise im Wesentlichen der Fahrzeugquerrichtung. Insbesondere kann die Querrichtung auch in einer horizontalen Ebene liegen. Die Querrichtung kann auch definiert sein durch eine orthogonale Richtung zur Längsrichtung in einer durch die Bodenfläche gebildete Ebene. Bezüglich möglicher Ausgestaltungen der Querhalteelemente und/oder Querflächen gilt das Gleiche wie für die Längshalteelemente und die Stützelemente und/oder Bodenfläche und Längshaltefläche gesagte. Insbesondere können die Querhaltefläche und die Längshaltefläche und/oder die Bodenfläche durch ein gemeinsames Element gebildet sein.

Die rückseitige Längshaltefläche kann insbesondere eine Rückenlehne des Fahrzeugsitzes vor einer Beschädigung durch verrutschendes Transportgut schützen. Gleichzeitig kann eine solche Längshaltefläche an der Rückseite der Transportguthaltevorrichtung ein sichereres Abstützen des Transportgutes ermöglichen als alleine mit einer Rückenlehne des Fahrzeugsitzes, da diese gegebenenfalls, insbesondere aufgrund einer Rückenlehnenneigung, zu weit von der Bodenfläche beabstandet sein kann.

Vorliegend kann der Ausdruck Halteelemente verwendet werden, um Querhalteelemente und/oder Längshalteelemente zu bezeichnen, sofern die entsprechenden Erläuterungen jeweils beide Arten von Halteelementen betreffen können. Ebenso kann der Ausdruck Halteflächen verwendet werden, um Querhalteflächen und/oder Längshalteflächen zu bezeichnen, sofern die entsprechenden Erläuterungen jeweils beide Arten von Halteflächen betreffen können. Der Ausdruck Elemente kann verwendet werden, um Stützelemente, Querhalteelemente und/oder Längshalteelemente zu bezeichnen, sofern entsprechende Erläuterungen jeweils alle drei Arten von Elementen betreffen können. Ebenso kann der Ausdruck Flächen verwendet werden, um Bodenflächen, Querhalteflächen und/oder Längshalteflächen zu bezeichnen, sofern entsprechende Erläuterungen jeweils alle drei Arten von Flächen betreffen können.

In weiterer vorteilhafter Ausgestaltung der Transportguthaltevorrichtung ist es vorgesehen, dass die Größe der Bodenfläche und/oder die Größe der Längshaltefläche und/oder die Größe der Querhaltefläche variabel einstellbar sind. Durch eine Größenveränderung der jeweiligen Flächen kann die Transportguthaltevorrichtung variabel an eine jeweilige Größe des Transportgutes sowie an den auf dem Fahrzeugsitz zur Verfügung stehenden Platz angepasst werden. Beispielsweise kann die Transportguthaltevorrichtung so an die Größe unterschiedlicher Transportboxen für Tiere angepasst werden, um diese möglichst gut abzustützen. Beispielsweise kann so sichergestellt sein, dass jeweilige Querhalteflächen und Längshalteflächen an jeweiligen Außenwänden einer Transportbox anliegen. Außerdem können größere Flächen auch eine größere Momentenabstützung ermöglichen.

Ein variables Einstellen der Größe der jeweiligen Flächen kann dabei auch bedeuten, dass jeweilige Elemente, welche die jeweiligen Flächen bilden, weiter voneinander beabstandet angeordnet werden, beispielsweise durch ein Auseinanderziehen. Beispielsweise können zwei Stützelemente, welche als Bodenplatten ausgebildet sind, voneinander zur Vergrößerung der Größe der Bodenfläche entfernt werden. Dabei kann zwischen den zwei Bodenplatten ein Freiraum entstehen, welcher hier dennoch zur Größe der Bodenfläche dazu gezählt werden soll. Insbesondere ist ein solcher Freiraum dann nicht störend, wenn dieser durch eine aufliegende Transportbox überbrückt wird. Die weitere Beabstandung der jeweiligen Bodenplatten ermöglicht eine größere Momentenabstützung des Transportguts und stellt somit eine größere effektive Bodenfläche zur Verfügung, ohne dass notwendigerweise eine tatsächliche physische Fläche vergrößert wird. Mit der besseren Momentenabstützung kann insbesondere ein Kippen von Transportgut mit hohem Schwerpunkt gut verhindert werden.

In weiterer vorteilhafter Ausgestaltung der Transportguthaltevorrichtung ist es vorgesehen, dass die Bodenfläche durch wenigstens zwei Stützelemente gemeinsam gebildet ist, welche jeweils zur Größeneinstellung der Bodenfläche in eine Querrichtung und/oder in die Längsrichtung relativ zueinander verschiebbar sind und/oder die Längshaltefläche durch wenigstens zwei Längshalteelemente gemeinsam gebildet ist, welche jeweils zur Größeneinstellung der Längshaltefläche in die Querrichtung und/oder in eine Hochrichtung relativ zueinander verschiebbar befestigt sind und/oder die Querhaltefläche durch wenigstens zwei Querhaltelemente gemeinsam gebildet ist, welche jeweils zur Größeneinstellung der Querhaltefläche in die Längsrichtung und/oder in die Hochrichtung relativ zueinander verschiebbar befestigt sind. So kann die Transportguthaltevorrichtung besonders einfach an eine jeweilige Größe des Transportgutes angepasst werden.

Vorzugsweise sind die jeweiligen Elemente dabei als Platten ausgebildet. Insbesondere können diese Platten in eine Abstützrichtung der jeweiligen zugeordneten Fläche zueinander versetzt sein, beispielsweise in Hochrichtung bei der Bodenfläche. Dadurch können die Platten in Abstützrichtung übereinander geschoben werden, um auch eine besonders kleine Fläche einstellen zu können.

Vorzugsweise sind die jeweiligen Elemente zur Größeneinstellung der jeweiligen Flächen verschiebbar an der Rahmenkonstruktion befestigt. Beispielsweise können die jeweiligen Elemente und/oder die Rahmenkonstruktion eine Nut aufweisen, mittels welcher die Elemente mit einer korrespondierenden Klemmschraube mit Gleitkörper befestigt werden. Alternativ kann auch die Rahmenkonstruktion veränderbar ausgebildet sein, beispielsweise indem jeweils zwei eine Fläche wenigstens teilweise bildende Elemente an unterschiedlichen Teilstücken eines teleskopisch längenverstellbaren Rahmenteils befestigt sind. Jede Fläche kann auch aus mehr als zwei Platten gebildet werden, beispielsweise aus vier Platten für eine gleichmäßige Skalierbarkeit. Auch können jeweilige Elemente selbst größenverstellbar sein, beispielsweise kann ein Stützelement eine teleskopisch größenverstellbare Platte sein.

In weiterer vorteilhafter Ausgestaltung der Transportguthaltevorrichtung ist es vorgesehen, dass eine Position wenigstens eines der Halteelemente und/oder der Stützelemente mittels eines Spannelements lösbar festgelegt ist, wobei das Spannelement in einer ersten Nut in einem Rahmenelement der Rahmenkonstruktion und in einer zweiten Nut in dem wenigstens einen Halteelement oder dem wenigstens einen Stützelement beweglich angeordnet ist, wobei die zweite Nut orthogonal zu der ersten Nut verläuft. Die jeweiligen Elemente sind dann nur beweglich in einem gelösten Zustand des zugeordneten Spannelements und in einem gespannten Zustand des Spannelements sind deren jeweiligen Positionen festgelegt. Durch das Vorsehen einer ersten Nut und einer zweiten Nut können die jeweiligen Halteelemente und/oder Stützelemente in alle Richtungen in einer Ebene bewegt werden. Vorzugsweise entspricht diese Ebene einer durch die Stützelemente gebildeten Ebene und/oder einer durch die Halteelemente gebildeten Ebene, welche dann jeweils der Bodenfläche und/oder den Halteflächen entsprechen können. Vorzugsweise verlaufen sowohl die erste als auch die zweite Nut dabei in dieser Ebene. Die Transportguthaltevorrichtung ist so besonders variabel und einfach einstellbar. Außerdem ist diese Konstruktion wartungsarm und kostengünstig herstellbar.

In weiterer vorteilhafter Ausgestaltung der Transportguthaltevorrichtung ist es vorgesehen, dass das Gelenk, mittels welchem das wenigstens eine Befestigungselement mit der Rahmenkonstruktion verbunden ist, ein Drehen des wenigstens einen Befestigungselements und der Rahmenkonstruktion relativ zueinander um eine Drehachse erlaubt, welche im Wesentlichen in Querrichtung verläuft. Vorzugsweise entspricht die Querrichtung dabei im Wesentlichen der Fahrzeugquerrichtung. Eine solche Drehachse erlaubt das besonders einfache Einstellen eines Winkels zwischen der Bodenfläche und dem wenigstens einen Befestigungselements beziehungsweise einer Sitzfläche in Einbaulage am Fahrzeugsitz. Dadurch kann besonders einfach ein Neigungsausgleich der Bodenfläche gegenüber einer Sitzfläche eingestellt werden. Außerdem kann die Transportguthaltevorrichtung so besonders einfach an relativ zu der Sitzfläche geneigten Befestigungselementen, insbesondere Befestigungselementen, welche zwischen einer Sitzfläche und einer Rückenlehne des Fahrzeugsitzes angeordnet sind, befestigt werden.

Das Gelenk kann dabei auch als Doppelgelenk ausgebildet sein, das heißt pro Befestigungselement könnten zwei Gelenke vorgesehen sein. Diese beiden Gelenke können dabei parallele Drehachsen aufweisen. Dadurch kann zum einen ein Neigungsausgleich gegenüber einer Neigung eines korrespondierenden Befestigungselements des Fahrzeugsitzes erfolgen als auch gegenüber einer Neigung der Sitzfläche des Fahrzeugsitzes, wobei diese Neigungsausgleiche unabhängig voneinander erfolgen können. Dadurch kann insbesondere leicht ein Berühren der Rahmenkonstruktion und der Sitzfläche vermieden werden während die Transportguthaltevorrichtung dennoch einfach am Fahrzeugsitz zu befestigen ist. Alternativ kann das Doppelgelenk auch beispielsweise ohne parallele Drehachsen ausgebildet sein, so dass beispielsweise eine Drehachse eines der beiden Gelenke im Wesentlichen in Längsrichtung verläuft und die des anderen der beiden Gelenke im Wesentlichen in Querrichtung. Dann kann eine Neigung der Bodenfläche sowohl in Längsrichtung als auch in Querrichtung leicht eingestellt werden, sodass die Bodenfläche beispielsweise besonders einfach um zwei Achsen horizontal in Einbaulage ausgerichtet werden kann.

In weiterer vorteilhafter Ausgestaltung der Transportguthaltevorrichtung ist es vorgesehen, dass die Bodenfläche und/oder die Längshaltefläche und/oder die Querhaltefläche in ihren jeweiligen Positionen relativ zu dem wenigstens einen Befestigungselement in Querrichtung und/oder in Längsrichtung und/oder in Hochrichtung verschiebbar sind. Dafür können die jeweiligen diese Flächen bildenden Elemente in Fahrzeugquerrichtung und/oder in Fahrzeuglängsrichtung und/oder in Fahrzeughochrichtung verschiebbar an der Rahmenkonstruktion befestigt sein. Dadurch kann die Lage des Transportgutes zumindest in einem gewissen Umfang relativ zu dem Fahrzeugsitz eingestellt werden. Zudem kann die Transportguthaltevorrichtung so einfach an unterschiedliche Platzverhältnisse, Kraftfahrzeuge und/oder Fahrzeugsitze angepasst werden.

Beispielsweise können dafür jeweilige Elemente erneut mittels jeweiliger Nuten und Spannelemente an der Rahmenkonstruktion verschiebbar befestigt sein. Dabei kann es insbesondere vorgesehen sein, dass eine jeweilige Positionsverschiebung der Flächen durch die Größeneinsteitbarkeit der jeweiligen Flächen zur Verfügung gestellt wird. Eine größenverstellbare Konstruktion der Transportguthaltevorrichtung kann also auch eine Positionsverstellung der jeweiligen Flächen ermöglichen. Dadurch kann auf weitere bewegliche Teile verzichtet werden.

In weiterer vorteilhafter Ausgestaltung der Transportguthaltevorrichtung ist vorgesehen, dass die Rahmenkonstruktion zwischen einem ersten Teil, an welchem das wenigstens eine Stützelement befestigt ist, und einem zweiten Teil, an welchem das wenigstens eine Längshalteelement befestigt ist, wenigstens ein zweites Gelenk aufweist, welches insbesondere ein Drehen der Bodenfläche und der Längshaltefläche relativ zueinander um eine Drehachse erlaubt, welche im Wesentlichen in Querrichtung verläuft und/oder die Rahmenkonstruktion zwischen dem ersten Teil, an welchem das wenigstens eine Stützelement befestigt ist, und einem dritten Teil, an welchem das wenigstens eine Querhalteelement befestigt ist, wenigstens ein drittes Gelenk aufweist, welches insbesondere ein Drehen der Bodenfläche und der Querhaltefläche relativ zueinander um eine Drehachse erlaubt, welche im Wesentlichen in Längsrichtung verläuft. Dadurch kann die Transportguthaltevorrichtung insbesondere an irregulär geformtes Transportgut angepasst werden.

So kann auch eine Tiertransportbox, welche hier auch als Transportbox bezeichnet werden kann, sicher seitlich abgestützt werden, welche an den Seiten unterschiedlich schräge Wände aufweist. Beispielsweise kann eine der Längshaltefläche zugwandte Seite der Tiertransportbox eine senkrechte Wand aufweisen und eine der Querhaltefläche zugewandte Seite eine geschrägte Wand. Die jeweiligen seitlichen Flächen der Transportguthaltevorrichtung können dann an jeweilige Neigungen gegenüber einer Horizontalen angepasst werden. Die Flächen der jeweiligen Transportguthaltevorrichtung weisen somit nicht mehr einen festen Winkel zueinander auf, sondern dieser kann jeweils variabel eingestellt werden. Insbesondere kann so ein Winkel zwischen jeweiligen ebenen Flächen der Transportguthaltevorrichtung eingestellt werden. Dabei können das zweite und/oder das dritte Gelenk auch arretierbar ausgebildet sein.

Das zweite Gelenk und/oder das dritte Gelenk ermöglichen zudem ein platzsparendes Verstauen der Transportguthaltevorrichtung, indem jeweilige Längshalteelemente und/oder Querhalteelemente zur Auflage auf der Bodenfläche verstellt werden. Die Transportguthaltevorrichtung kann so zusammengefaltet werden, dass jeweilige Querhalteelemente und/oder Längshalteelemente kaum mehr von der Bodenfläche abstehen.

Vorzugsweise ist in Abhängigkeit von der Position eines Längshalteelements und/oder in Abhängigkeit von der Position eines Querhalteelements relativ zu einem Stützelement das wenigstens eine Befestigungselement verriegelbar und/oder entriegelbar. Beispielsweise kann das Befestigungselement bei einem Zusammenklappen eines Längshalteelements, bis es eben auf der Bodenfläche aufliegt, entriegelt werden, sodass die Transportguthaltevorrichtung von dem Fahrzeugsitz gelöst werden kann und/oder an diesem befestigt werden kann. Bei einem Aufklappen des Längshalteelements so weit, dass zwischen der Längshaltefläche und der Bodenfläche beispielsweise wenigstens ein Winkel von 90 Grad vorgesehen ist, kann alternativ oder zusätzlich das Befestigungselement automatisch verriegelt werden, sodass die Transportguthaltevorrichtung sicher an dem Fahrzeugsitz befestigt ist. Dafür kann beispielsweise ein Seilzug, insbesondere ein Bowdenzug, in der Rahmenkonstruktion angeordnet sein.

Bei mehreren Längshalteflächen und/oder Längshalteelementen und/oder mehreren Querhalteflächen und/oder mehreren Querhalteelementen kann dabei pro jeweiliger Fläche ein zweites beziehungsweise drittes Gelenk vorgesehen sein. Alternativ können aber auch mehrere zweite und/oder dritte Gelenke vorgesehen sein, beispielsweise pro Haltelement ein jeweils zugeordnetes zweites beziehungsweise drittes Gelenk. Dadurch ist die Transportguthaltevorrichtung besonders gut in ihrer Form an das Transportgut anpassbar. Es kann beispielsweise aber auch vorgesehen sein, für mehrere Längshalteelemente und/oder Querhalteelemente ein gemeinsames zweites Gelenk beziehungsweise drittes Gelenk vorzusehen, wodurch die Transportguthaltevorrichtung besonders schnell einstellbar und besonders kostengünstig ist.

In weiterer vorteilhafter Ausgestaltung der Transportguthaltevorrichtung ist vorgesehen, dass die Transportguthaltevorrichtung eine Isofix-Befestigungsvorrichtung zum lösbaren Befestigen der Transportguthaltevorrichtung an dem Fahrzeugsitz umfasst, von der das wenigstens eine Befestigungselement ein Teil ist. Eine Isofix-Befestigung ist eine normierte Befestigung, welche beispielsweise in der ISO Norm 13216 standardisiert ist. Die Isofix-Befestigung ist besonders dazu geeignet, jeweilige im Kraftfahrzeug auftretende Kräfte aufnehmen zu können. So ist die Transportguthaltevorrichtung besonders sicher an dem Fahrzeugsitz gehalten. Zudem sind bereits in einer Vielzahl von Kraftfahrzeugen beziehungsweise an deren Fahrzeugsitzen jeweilige korrespondierende Befestigungselemente für die Isofix-Befestigungsvorrichtung vorgesehen. So kann die Transportguthaltevorrichtung mit einem bekannten und einfach zu bedienenden System sicher an dem Fahrzeugsitz gehalten werden. Jeweilige zusätzliche Elemente und/oder eine aufwendige Nachrüstung von Fahrzeugsitzen zur lösbaren Befestigung der Transportguthaltevorrichtung können so vermieden werden. Zudem kann so auch die Transportguthaltevorrichtung besonders einfach ausgebildet sein, da jeweilige Befestigungselemente nicht an jeweilige unterschiedliche Fahrzeugsitze anpassbar gestaltet sein müssen.

Vorzugsweise ist die Transportguthaltevorrichtung mittels des Längshalteelements an dessen Vorderseite an einem gegenüberliegenden Vordersitz oder einem gegenüberliegenden Armaturenbrett im Innenraum des Kraftfahrzeugs abstützbar. Die Längshaltevorrichtung kann so an dem Vordersitz und/oder an dem Armaturenbrett abgestützt werden, wodurch ein Kippen der Transportguthaltevorrichtung verhindert werden kann. Dies ist besonders vorteilhaft, wenn das Befestigungselement, beispielsweise bei einer Isofix-Befestigung, noch ein Rotieren um eine Achse ermöglicht, welche beispielsweise der Querrichtung des Kraftfahrzeugs entsprechen kann. Gleichzeitig kann in diesem Fall auch ein Berühren der Rahmenkonstruktion mit einer Oberfläche des Fahrzeugsitzes vermieden werden. Eine solche Abstützung kann auch eine Abstützung an drei Punkten der Transportguthaltevorrichtung ermöglichen, wie diese auch von Isofix-Norm für Kindersitze gefordert wird. Dadurch ist es gegebenenfalls auch möglich, an der Transportguthaltevorrichtung Kindersitze zu befestigen, welche nicht für eine Befestigung an jeweiligen Isofix-Befestigungselementen vorgesehen sind. In diesem Fall bildet die Transportguthaltevorrichtung eine Art Adapter für die Isofix-Befestigung.

In weiterer vorteilhafter Ausgestaltung der Transportguthaltevorrichtung ist es vorgesehen, dass die Transportguthaltevorrichtung wenigstens eine Adaptervorrichtung umfasst, welche an der Vorderseite, Hinterseite oder Querseite, bevorzugt lösbar, an einem ersten Rahmenteil der Rahmenkonstruktion befestigt ist, wobei an der Adaptervorrichtung wenigstens ein zweites Rahmenteil, bevorzugt lösbar, befestigt ist. Dadurch kann vorteilhafterweise die Transportguthaltevorrichtung durch zusätzliche Rahmenteile einfach ergänzt werden, gegebenenfalls auch nachträglich. Damit kann die Transportguthaltevorrichtung beispielsweise in ihrer Größe modular verändert werden und/oder durch zusätzliche Stützelemente, wie beispielsweise einen Stützfuß ergänzt werden.

Das erste und das zweite Rahmenteil können dabei vorzugsweise in einem Winkel zueinander angeordnet sein, insbesondere kann ein Winkel zwischen jeweiligen Längserstreckungen der beiden Rahmenteile im Wesentlichen rechtwinkelig sein. Vorzugsweise ist die Adaptervorrichtung an einem ersten Rahmenteil befestigt, welches auch das die Bodenfläche ausbildende Stützelement hält. Die Rahmenteile können beispielsweise als Rohre oder hohle Vierkantprofile ausgebildet sein. Die Adaptervorrichtung kann beispielsweise in einen Hohlraum der jeweiligen Rahmenteile eingesteckt sein. Beispielsweise kann die Adaptervorrichtung mittels eines Reibschlusses an den jeweiligen Rahmenteilen befestigt sein. Alternativ oder zusätzlich kann die Adaptervorrichtung beispielsweise auch mit den jeweiligen Rahmenteilen verschraubt sein. Auch kann vorgesehen sein, dass die Adaptervorrichtung durch einen jeweiligen Kraftfluss beim Halten jeweiliger Teile bzw. bei einem Einwirken des Transportguts aufgrund jeweiliger Beschleunigungen eine Selbstverkeilung mit den jeweiligen Rahmenteilen erfährt. Dazu kann wenigstens ein Teil der Adaptervorrichtung entsprechend in einem Winkel zu einem Kraftfluss angeordnet sein.

Vorzugweise umfasst die Transportguthaltevorrichtung zwei Adaptervorrichtungen, welche jeweils an einem entsprechenden ersten Rahmenteil angeordnet sind. Beispielsweise kann die Transportguthaltevorrichtung zwei Vierkantprofile umfassen, welche das die Bodenfläche ausbildende Stützelement tragen. An jedem dieser Vierkantprofile kann dann entsprechend eine Adaptervorrichtung befestigt sein, insbesondere an deren jeweiligen vorderen Enden, welche jeweils wenigstens ein zweites Rahmenteil hält. Die Adaptervorrichtung kann beispielsweise in einen jeweiligen Endbereich der jeweiligen Rahmenteile eingesetzt sein. Beispielsweise kann die Adaptervorrichtung leicht nachgerüstet werden, indem eine das jeweilige Rahmenteil verschließende Endkappe entnommen wird und stattdessen die Adaptervorrichtung eingesetzt wird. Die lösbare Befestigung kann dabei beispielsweise mittels Reibschlusses, einer Clipsverbindung, einer Verschraubung und/oder einer Schnappverbindung hergestellt werden.

In weiterer vorteilhafter Ausgestaltung der Transportguthaltevorrichtung ist es vorgesehen, dass das zweite Rahmenteil als ein Stützfuß ausgebildet ist, mittels welchem die an dem Fahrzeugsitz befestigte Transportguthaltevorrichtung auf einem Fahrzeuginnenboden abgestützt werden kann. Dafür kann sich das zweite Rahmenteil bei der an dem Fahrzeugsitz befestigten Transportguthaltevorrichtung im Wesentlichen in Fahrzeughochrichtung nach unten erstrecken. Für eine gute Kraftableitung in den Fahrzeugboden, insbesondere jeweiliger Längsbeschleunigungskräfte, kann dabei ein leichter Winkel bezüglich einer Vertikalen vorgesehen sein. Der Fahrzeuginnenboden kann beispielsweise ein Boden eines Fußraums eines Passagierraums des Kraftfahrzeugs sein. Mittels des Stützfußes kann die Transportguthaltevorrichtung zusätzlich zu einem Abstützen auf einer Sitzfläche des Fahrzeugsitzes abgestützt werden oder auch alternativ so ausgestaltet sein, dass eine jeweilige Unterseite der Transportguthaltevorrichtung nicht mit einer Sitzfläche des Fahrzeugsitzes in Kontakt kommt, um diesen zu schonen. Zudem kann der Stützfuß Teil einer Isofixbefestigungsvorrichtung sein und dazu ausgebildet sein, entsprechende Normen zu erfülllen. Selbstverständlich können auch zwei Adaptervorrichtungen und zwei als Stützfüße ausgebildete zweite Rahmenteile vorgesehen werden. Dadurch kann die Transportguthaltevorrichtung mit besonders wenig Torsionsspiel bzw. besonders hoher Torsionssteifigkeit abgestützt werden.

Vorzugsweise ist das zweite Rahmenteil längenverstellbar ausgebildet, um dieses an unterschiedlich hohe Fahrzeugsitze leicht anpassen zu können, insbesondere wenn das zweite Rahmenteil als Stützfuß ausgebildet ist. Beispielsweise kann das zweite Rahmenteil zwei teleskopisch ineinander verschiebbare Rahmenteilelemente umfassen. Diese können beispielsweise mittels eines Stiftes oder einer Verschraubung in ihrer Länge fixiert werden. Alternativ kann die Längenfixierung auch beispielsweise mittels einer Klemmverbindung erfolgen.

Vorzugsweise kann dabei an dem zweiten Rahmenteil ein Fußelement angeordnet sein, mittels welchem das als Stützfuß ausgebildete zweite Rahmenteil auf dem Fahrzeuginnenboden abgestützt werden kann. Dieses Stützfußelement kann beispielsweise eine Bodenauflagefläche ausbilden, welche eine Flächennormale hat, welche von einer Haupterstreckungsrichtung des zweiten Rahmenteils abweichen kann. Dadurch kann eine sichere und spielfreie Abstützung am Fahrzeuginnenboden bereitgestellt werden, ohne dass das zweite Rahmenteil senkrecht zum Boden des Fahrzeugs verläuft. Beispielsweise kann das Stützfußelement dafür auch mit dem zweiten Rahmenteil gelenkig verbunden sein, beispielsweise mittels eines Kugelgelenks. Dadurch kann dessen Winkelstellung an den Fahrzeuginnenboden angepasst werden.

In weiterer vorteilhafter Ausgestaltung der Transportguthaltevorrichtung ist es vorgesehen, dass das zweite Rahmenteil als ein Verlängerungselement ausgebildet ist, an dem ein zusätzliches Längshaltelement oder Querhaltelement in Fahrzeughochrichtung über einem jeweiligen zugeordneten Längshalteelement oder Querhalteelement, bevorzugt lösbar, befestigt ist, um mit diesem jeweiligen zugeordneten Längshaltelement bzw. Querhalteelement gemeinsam die jeweilige Längshaltefläche bzw. Querhaltefläche auszubilden. Dadurch können jeweilige Längshalteflächen und/oder Querhalteflächen einfach vergrößert werden, insbesondere modular. Dadurch kann die Transportguthaltevorrichtung an unterschiedlich hohe Transportgüter, wie beispielsweise unterschiedliche hohe Tiertransportboxen, einfach und/oder nachträglich angepasst werden.

Beispielsweise kann mit dem zusätzlichen Längshalteelement an der Vorderseite der Transportguthaltevorrichtung so eine vergrößerte vordere Längshaltefläche ausgebildet werden. Entsprechend kann auch mit dem zusätzlichen Längshalteelement an der Rückseite gemeinsam mit einem hinteren zweiten Längshalteelement eine vergrößerte hintere Längshaltefläche ausgebildet werden. Mit jeweiligen zusätzlichen Querhalteelementen kann an der linken Seite und/oder an der rechten Seite gemeinsam die linke und/oder rechte Querhaltefläche vergrößert sein. Dabei ist selbstverständlich eine Kombination mehrerer zusätzlicher Längshalteelemente und/oder Querhalteelemente möglich. Beispielsweise können entsprechend ausreichend viele Adaptervorrichtungen befestigt werden, um sowohl an der Vorderseite als auch an der Hinterseite ein zusätzliches Längshalteelement zu befestigen. Dabei kann dann auch eine entsprechende Anzahl von Verlängerungselementen vorgesehen werden. Beispielsweise können pro zusätzlichem Längshalteelement zwei zusätzliche zweite Rahmenteile als Verlängerungselemente vorgesehen sein und zwei entsprechende Adaptervorrichtungen. Ebenso ist es möglich, sowohl ein Verlängerungselement als auch einen Stützfuß vorzusehen, insbesondere jeweils pro Adaptervorrichtung. Eine solche Kombination ist dabei besonders vorteilhaft, da gerade bei einer Transportguthaltevorrichtung mit vergrößerten Flächen auch mit einem größeren Hebelarm und damit größeren auf die Befestigung wirkenden Kräften zu rechnen ist, welche vorteilhafterweise dann mit jeweiligen Stützfüßen sicher aufgenommen werden können.

Vorzugsweise kann die Adaptervorrichtung dazu ausgebildet sein, dass daran sowohl der Stützfuß als auch ein Verlängerungselement für ein weiteres Längshalteelement oder Querelement, bevorzugt lösbar, befestigbar ist bzw. befestigt ist.

Vorzugsweise bilden die zusätzlichen Längshalteelemente oder Querhalteelemente mit den zugeordneten Längshalteelementen bzw. Querhalteelementen gemeinsam eine im Wesentlichen ebene und/oder im Wesentlichen durchgehende jeweilige Längshaltefläche bzw. Querhaltefläche. Insbesondere können das zusätzliche Längshalteelement oder Querhalteelement im Wesentlichen bündig an die jeweiligen zugeordneten Längshalteelement oder Querhalteelemente anschließen.

In weiterer vorteilhafter Ausgestaltung der Transportguthaltevorrichtung ist es vorgesehen, dass das Verlängerungselement zusätzlich mit einem das zugeordnete Längshalteelement oder Querhalteelement haltende Rahmenteil, bevorzugt lösbar, befestigt ist. Das Verlängerungselement kann so besonders sicher an der restlichen Rahmenkonstruktion gehalten sein. Beispielsweise kann das Verlängerungselement an einer Unterseite mittels der Adaptervorrichtung befestigt sein und in einem Mittenbereich an dem zugeordneten Längshalteelement oder Querhalteelement haltenden Rahmenteil befestigt sein, beispielsweise mittels einer Verschraubung. Dadurch können das Verlängerungselement und das das zugeordnete Längshalteelement oder Querhalteelement haltende Rahmenteil, welche beispielsweise beide im Wesentlichen in Fahrzeughochrichtung angeordnet sind, aneinander abgestützt werden. Dadurch werden die jeweiligen Längshalteelemente und/oder Querhalteelemente besonders gut abgestützt, so dass besonders hohe Kräfte aufgenommen werden können.

In weiterer vorteilhafter Ausgestaltung der Transportguthaltevorrichtung ist es vorgesehen, dass an dem zusätzlichen Längshalteelement oder Querhalteelement ein drittes Rahmenteil, bevorzugt lösbar, befestigt ist, welches an dem das jeweilige zugeordnete Längshalteelement oder Querhalteelement haltende Rahmenteil, bevorzugt lösbar, befestigt ist, insbesondere mittels eines Verbindungselements. Beispielsweise kann in einem Hohlraum des dritten Rahmenteils und des die jeweiligen zugeordneten Längshalteelemente oder Querhalteelemente haltende Rahmenteils ein Verbindungselement eingesteckt sein, um die beiden Rahmenteile miteinander sicher zu verbinden. Das Verbindungselement kann dabei beispielsweise als stabiles Massivteil ausgebildet sein oder als leichtes und kostengünstiges Profilteil. Dabei können beispielsweise zwei übereinander angeordnete Längshalteelemente von einem jeweiligen zugeordneten Rahmenteil gehalten werden, wobei diese jeweiligen zugeordneten Rahmenteile miteinander mittels des Verbindungselements gehalten sind. Zusätzlich können diese beiden zugeordneten Rahmenteile oder auch nur das obere der beiden zugeordneten Rahmenteile mittels des Verlängerungselements und der Adaptervorrichtung zusätzlich an der Rahmenkonstruktion gehalten bzw. abgestützt werden.

Vorzugsweise ist dabei das dritte Rahmenteil identisch zu dem das jeweilige zugeordnete Längshalteelement oder Querhalteelement haltende Rahmenteil ausgebildet. Ebenso kann das zusätzliche Längshalteelement oder Querhalteelement identisch zu dem zugeordneten Längshalteelement oder Querhalteelement ausgebildet sein, genauso wie jeweilige Verbindungen zwischen den Elementen. Dadurch ergibt sich eine modulare Bauweise, bei der die Transportguthaltevorrichtung durch identische Längshalteelemente oder Querhalteelemente und entsprechende Rahmenteile ergänzt werden kann. Die jeweilige zusätzliche Befestigung bzw. Verlängerung kann dabei mittels der Adaptervorrichtung, dem Verlängerungselement und optional dem Verbindungselement erfolgen. Dadurch kann die Transportguthaltevorrichtung modular vergrößert werden. Zudem können so kostengünstig Gleichbauteile verwendet werden.

In weiterer vorteilhafter Ausgestaltung der Transportguthaltevorrichtung ist es vorgesehen, dass an der Adaptervorrichtung wenigstens ein viertes Rahmenteil, bevorzugt lösbar, befestigt ist, wobei das zweite Rahmenteil als der Stützfuß und das vierte Rahmenteil als das Verlängerungselement ausgebildet ist. Dadurch kann mittels einer einzigen Adaptervorrichtung sowohl eine Verlängerung in Hochrichtung nach oben als auch eine Abstützung am Fahrzeuginnenboden bereitgestellt werden. Vorzugsweise ist eine solche Adaptervorrichtung an der Vorderseite der Transportguthaltevorrichtung angeordnet. Die Adaptervorrichtung kann dabei beispielsweise als eine Art T-Stück ausgebildet sein und beispielsweise als Massivteil oder Profilelement ausgebildet sein.

Die Adaptervorrichtung kann dabei vorzugsweise zwei Adapterelemente umfassen, wobei das erste der zwei Adapterelemente dazu ausgebildet ist, an der Vorderseite, Hinterseite oder Querseite, bevorzugt lösbar, an dem ersten Rahmenteil der Rahmenkonstruktion befestigt zu werden, insbesondere mittels eines Reibschlusses, und dazu, mit dem zweiten oder vierten Rahmenteil, bevorzugt lösbar, verbunden zu werden. Das zweite der zwei Adapterelemente kann dazu ausgebildet sein, mit dem ersten Adapterelement und dem anderen des vierten oder zweiten Rahmenteils, bevorzugt lösbar, verbunden zu werden. Mit anderen Worten kann so eines der beiden Adapterelemente mit der restlichen Rahmenkonstruktion der Transportguthaltevorrichtung verbunden werden, während das zweite der beiden Adapterelement lediglich mit diesem Adapterelement verbunden wird. Dadurch kann die Adaptervorrichtung modular einfach erweitert werden. Beispielsweise kann das erste Adapterelement dazu benutzt werden, ein Verlängerungselement oder einen Stützfuß bereitzustellen bzw. befestigen zu können, während das zweite Adapterelement dann eine entsprechende Erweiterung erlaubt, um, insbesondere im Wesentlichen an der gleichen Stelle, zusätzlich noch einen Stützfuß bzw. ein Verlängerungselement vorzusehen.

Vorzugsweise sind die beiden Adapterelemente lösbar formschlüssig miteinander verbindbar. Beispielsweise können die zwei Adapterelemente mittels einer Steckverbindung wie einer Schwalbenschwanzverbindung miteinander verbunden werden. Diese Schwalbenschwanzverbindung kann dabei so gestaltet sein, dass bei einer jeweiligen Abstützung vom Transportgut eines Selbstverkeilung erfolgt, so dass die beiden Adapterelemente nicht auseinandergleiten und/oder sich die Adaptervorrichtung nicht vom ersten Rahmenteil lösen kann.

Ein zweiter Aspekt der Erfindung betrifft ein Tiertransportsystem für ein Kraftfahrzeug mit einer Transportguthaltevorrichtung gemäß dem ersten Aspekt der Erfindung. Die sich aus der Transportguthaltevorrichtung gemäß dem ersten Aspekt der Erfindung ergebenden Merkmale und Vorteile sind der Beschreibung des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind. Das Tiertransportsystem gemäß dem zweiten Erfindungsaspekt umfasst ferner eine darauf angeordnete Transportvorrichtung für Tiere, insbesondere eine Tiertransportbox, bevorzugt mit gepolsterten Seitenwänden, wobei die Tiertransportvorrichtung vorzugsweise mittels einer Schnappverbindung an der Transportguthaltevorrichtung lösbar befestigt ist.

Durch die Anordnung der Transportvorrichtung für Tiere auf der Transportguthaltevorrichtung können Tiere besonders sicher und komfortabel in einem Innenraum eines Kraftfahrzeugs transportiert werden. Gepolsterte Seitenwände ermöglichen einen für das Tier komfortablen Transport auch bei jeweiligen wirkenden Fliehkräften aufgrund von Beschleunigung und Verzögerung sowie Kurvenfahrt. Alternativ oder zusätzlich zu einer Polsterung kann die Tiertransportvorrichtung beispielsweise auch gerundete Seitenwände aufweisen, welche in eine Bodenfläche übergehen. Auch dadurch ist das Tiertransportsystem besonders komfortabel für das darin zu transportierende Tier. Eine lösbare Schnappverbindung der Tiertransportvorrichtung an der Transportguthaltevorrichtung ermöglicht ein besonders einfaches Anordnen der Tiertransportvorrichtung an der Transportguthaltevorrichtung und damit in dem Kraftfahrzeug. Gleichzeitig kann die Tiertransportvorrichtung separat von der Transportguthaltevorrichtung aus dem Kraftfahrzeug entnommen werden und ist ansonsten sicher an dieser gehalten. So kann beispielsweise die Transportguthaltevorrichtung an dem Fahrzeugsitz verbleiben, während die Tiertransportvorrichtung von dem Besitzer des Tieres beispielsweise in ein Haus getragen wird. So kann beispielsweise das Tier in der Tiertransportbox verbleiben, um es beispielsweise zu einem Tierarzt zu bringen, ohne das das Tier eine Chance hat, vor diesem Besuch zu flüchten.

Weitere Vorteile, Merkmale und Einzelheiten der Erfindung ergeben sich aus der nachfolgenden Beschreibung eines bevorzugten Ausführungsbeispiels sowie anhand der Figuren. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in deren Kombination oder in Alleinstellung verwendbar, ohne den Rahmen der Erfindung zu verlassen.

Dabei zeigt:
- Fig. 1: in einer schematischen Perspektivansicht eine Transportguthaltevorrichtung, welche an einem Fahrzeugsitz in einem Innenraum eines Kraftfahrzeugs befestigt ist;
- Fig. 2: in einer schematischen Perspektivansicht die Transportguthaltevorrichtung gemäß Fig. 1, wobei auf der Transportguthaltevorrichtung eine Tiertransportbox angeordnet ist;
- Fig. 3: in einer schematischen Perspektivansicht die Transportguthaltevorrichtung gemäß Fig. 1 von unten;
- Fig. 4: in einer schematischen Perspektivansicht zwei Transportguthaltevorrichtungen gemäß Fig. 1 mit einer anderen als der in Fig. 2 gezeigten Ausführungsform einer darauf angeordneten Tiertransportbox;
- Fig. 5: in einer schematischen Perspektivansicht eine andere Ausgestaltungsform einer Rahmenkonstruktion der Transportguthaltevorrichtung gemäß Fig. 1;
- Fig. 6: in einer schematischen Perspektivansicht eine andere Ausführungsform einer Transportguthaltevorrichtung;
- Fig. 7: in einer weiteren schematischen Perspektivansicht die Transportguthaltevorrichtung gemäß Fig. 6;
- Fig. 8: in einer schematischen Perspektivansicht eine weitere Ausführungsform einer Transportguthaltevorrichtung;
- Fig. 9: in einer schematischen Perspektivansicht ein erstes Adapterelement einer Adaptervorrichtung der Transportguthaltevorrichtung gemäß Fig. 8;
- Fig. 10: in einer schematischen Perspektivansicht ein zweites Adapterelement einer Adaptervorrichtung der Transportguthaltevorrichtung gemäß Fig. 8;
- Fig. 11: in einer schematischen Perspektivansicht ein Verbindungselement zum Verbinden zweier Rahmenteile der Transportguthaltevorrichtung gemäß Fig. 8; und
- Fig. 12: in einer schematischen Perspektivansicht ein Stützfußelement der Transportguthaltevorrichtung gemäß Fig. 8

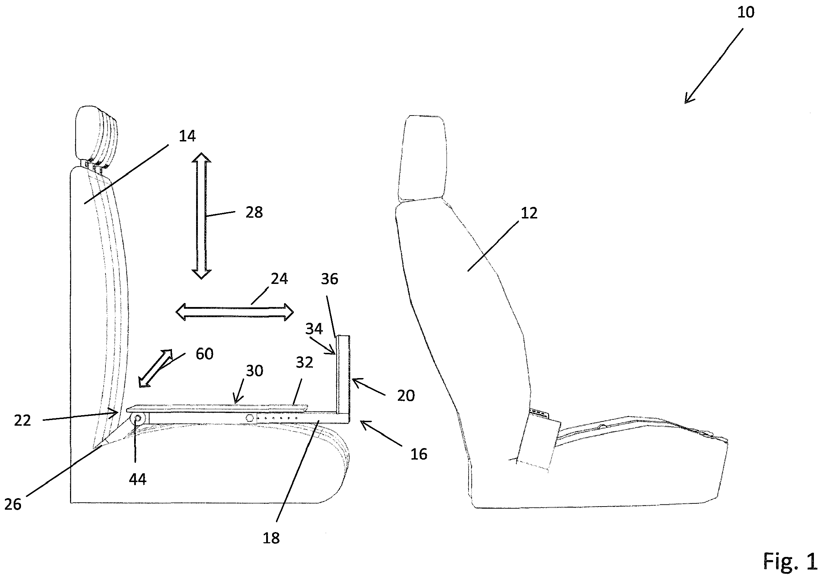

Fig. 1 zeigt in einer schematischen Perspektivansicht einen Innenraum 10 eines Kraftfahrzeugs mit einer vorderen Sitzreihe 12 und mehreren hinteren Fahrzeugsitzen 14. An einem der hinteren Fahrzeugsitze 14 ist eine Transportguthaltevorrichtung 16 für den Transport eines Transportguts, insbesondere einer Transportvorrichtung für Tiere, lösbar befestigt. Die Transportguthaltevorrichtung 16 umfasst dabei eine Rahmenkonstruktion 18 und weist eine Vorderseite 20 und eine Rückseite 22 auf. Die Vorderseite 20 und die Rückseite 22 definieren dabei eine Längsrichtung, welche in der Fig. 1 durch den Doppelpfeil 24 markiert ist. Die Längsrichtung entspricht dabei in der gezeigten Einbaulage der Transportguthaltevorrichtung 16 der Fahrzeuglängsrichtung. Die Vorderseite 20 ist einer Vorwärtsfahrtrichtung des Kraftfahrzeugs zugewandt. An der Rückseite 22 ist an der Rahmenkonstruktion 18 ein Befestigungselement 26 erkennbar, welches dazu ausgebildet ist, zur Befestigung der Transportguthaltevorrichtung 16 an einer korrespondierenden Isofix-Befestigung des Fahrzeugsitzes 14 lösbar befestigt zu werden, wenn die Transportguthaltevorrichtung 16 auf dem Fahrzeugsitz 14 angeordnet ist. Die Transportguthaltevorrichtung 16 ist also über dem Fahrzeugsitz 14 in Hochrichtung angeordnet, welche durch Doppelpfeil 28 gekennzeichnet ist.

Die Transportguthaltevorrichtung 16 weist ein eine Bodenfläche 30 ausbildendes Stützelement 32 auf, welches an der Rahmenkonstruktion 18 lösbar befestigt ist, vorliegend mittels einer Schraubverbindung. Das Stützelement 32 ist im in Fig. 1 gezeigten Fall als ebene Platte ausgebildet, wodurch die Bodenfläche 30 ebenfalls eben ist. Weiterhin weist die Transportguthaltevorrichtung 16 an ihrer Vorderseite 20 wenigstens ein eine Längshaltefläche 34 ausbildendes Längshalteelement 36 auf, welches an der Rahmenkonstruktion 18 lösbar befestigt ist, vorliegend ebenfalls mittels einer Schraubverbindung. Das Längshalteelement 36 ist in dem in Fig. 1 gezeigten Beispiel der Transportguthaltevorrichtung 16 zudem ebenfalls als ebene Platte ausgebildet, wodurch auch die Längshaltefläche 34 als ebene Fläche ausgebildet ist.

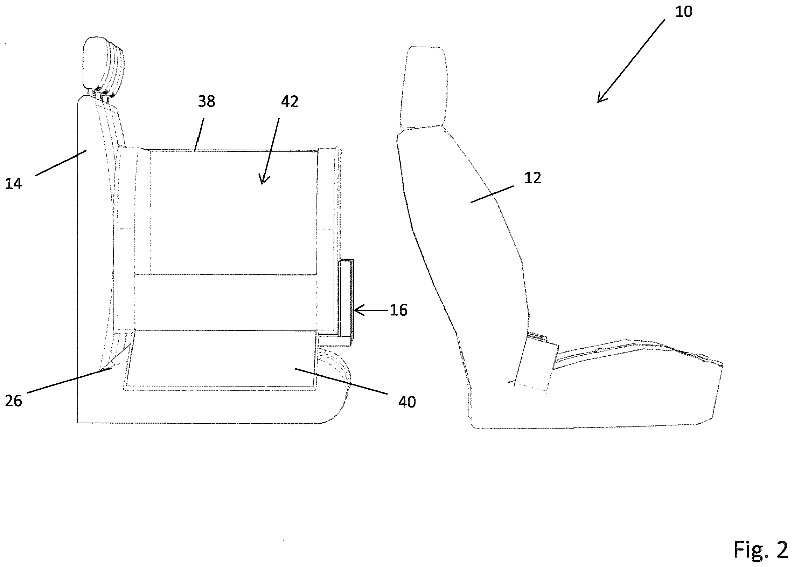

Durch die Bodenfläche 30 und die Längshaltefläche 34 kann Transportgut wie eine Transportbox 38 für Tiere, wie diese beispielsweise in der schematischen Perspektivansicht gemäß Fig. 2 gezeigt ist, sicher gehalten werden. Die Bodenfläche 30 ermöglicht dabei ein Abstützen der Transportbox 38, welche auch als Tiertransportbox 38 bezeichnet wird, in Hochrichtung und die Längshaltefläche 34 ein Abstützen in Längsrichtung, wodurch insbesondere ein Verrutschen der Tiertransportbox 38 bei einem Abbremsen des Kraftfahrzeugs verhindert werden kann. Die Tiertransportbox 38 weist dabei ein Klappenelement 40 auf, welches in Fig. 2 im ausgeklappten Zustand gezeigt ist. Dabei bedeckt das Klappenelement 40 im ausgeklappten Zustand eine Außenseite des Fahrzeugsitzes 14, wodurch beispielsweise ein Hund in eine Öffnung 42 der Tiertransportbox 38 klettern kann, ohne dass er dabei jeweilige Sitzflächen des Fahrzeugsitzes 14 berührt und dadurch verschmutzen oder beschädigen kann. Im eingeklappten Zustand verschließt das Klappenelement 40 die Öffnung 42 wenigstens so weit, dass ein in der Tiertransportbox 38 befindliches Tier diese nicht mehr verlassen kann. Das Klappenelement 40 kann als biegeschlaffes Textil ausgebildet sein, welches mit der restlichen Tiertransportbox 38 zum Verschließen der Öffnung 42 wenigstens bereichsweise mittels eines Reißverschlusses koppelbar ist.

Weiterhin weist die Transportguthaltevorrichtung 16 ein Gelenk 44 auf, mittels welchem das Befestigungselement 26 mit der Rahmenkonstruktion 18 der Transportguthaltevorrichtung 16 verbunden ist. Mittels dieses Gelenks 44 kann eine Neigung der ebenen Bodenfläche 30 gegenüber einer Neigung einer Sitzfläche des Fahrzeugsitzes 14 ausgeglichen werden. Wie in Fig. 1 zu erkennen ist, ist die Sitzfläche des Fahrzeugsitzes 14 anatomisch geformt, insbesondere nach oben in Fahrzeughochrichtung gekrümmt. Ohne das Gelenk 44 würde die Transportguthaltevorrichtung 16 gegebenenfalls in Einbaulage eine geneigte Bodenfläche 30 aufweisen, deren Neigung insbesondere von der Form der Sitzfläche des Fahrzeugsitzes 14 abhängig ist. Eine starke Neigung der Bodenfläche 30 gegenüber der Horizontalen in Einbaulage ist für ein in der Tiertransportbox 38 befindliches Tier gegebenenfalls unangenehm, sodass es während einer Fahrt unruhig ist. Ein unruhiges Tier kann von jeweiligen Insassen des Kraftfahrzeugs als unangenehm empfunden werden und zudem den Fahrer des Kraftfahrzeugs unnötig ablenken. Der durch das Gelenk 44 ermöglichte Neigungsausgleich ist damit vorteilhaft für die Sicherheit und den Komfort der Fahrzeugpassagiere. Zudem kann mittels des Gelenks 44 auch eine Ausrichtung des Befestigungselements 26 gegenüber der restlichen Rahmenkonstruktion 18 angepasst werden, sodass die Transportguthaltevorrichtung 16 besonders einfach auch in unterschiedliche gestalteten Fahrzeugsitzen 14 befestigt werden kann, ohne das eine konstruktive Änderung notwendig ist.

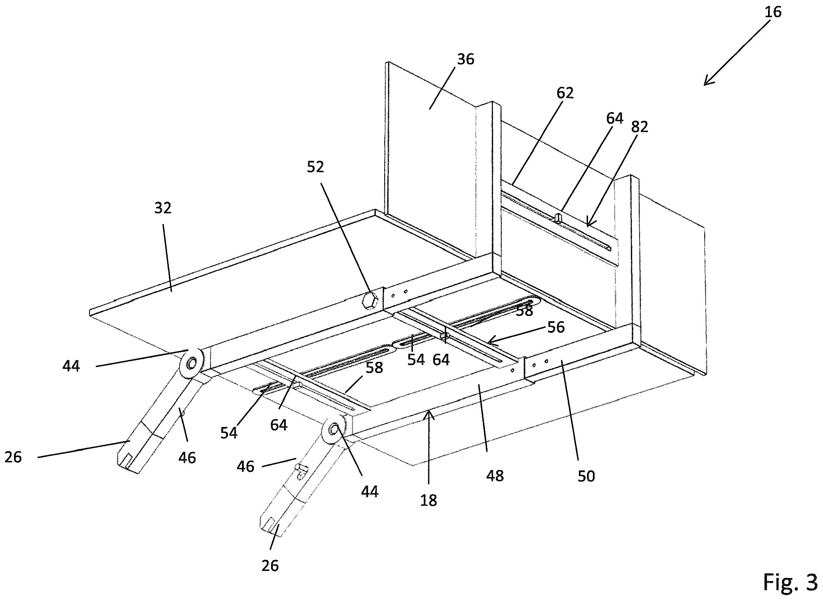

In der schematischen Perspektivansicht der Transportguthaltevorrichtung 16 von unten gemäß Fig. 3 sind weitere Details der Transportguthaltevorrichtung 16 gezeigt. Wie zu erkennen ist, weist die Transportguthaltevorrichtung 16 zwei Befestigungselemente 26 auf, welche beispielsweise in einem Abstand von circa 280 Millimetern voneinander angeordnet sind und dazu ausgebildet sind, Haltebügel mit einer Stärke von circa 6 Millimetern zu umgreifen. Die Befestigungselemente 26 sind dabei als Teil einer Isofix-Befestigungsvorrichtung der Transportguthaltevorrichtung 16 ausgebildet.

Weiterhin weist die Transportguthaltevorrichtung 16 zwei Arretierungselemente 46 auf. Je nach Ausführungsform können mittels dieser Arretierungselemente 46 die Befestigungselemente 26 geöffnet, geschlossen, verriegelt und/oder entriegelt werden. Alternativ oder zusätzlichen können die Arretierungselemente 46 auch dazu dienen, die Gelenke 44 zu arretieren, um einen Winkel fest einzustellen. Zudem ist zu erkennen, dass die Rahmenkonstruktion 18 teleskopisch in der Längsrichtung ausgebildet ist. Zu diesem Zweck umfasst die Rahmenkonstruktion 18 ein erstes Rahmenstück 48 und ein zweites Rahmenstück 50, welche zur Längenverstellung der Rahmenkonstruktion 18 in Längsrichtung ineinander und auseinander geschoben werden können. Eine jeweilige Position des ersten Rahmenstücks 48 und des zweiten Rahmenstücks 50 zueinander kann dabei durch ein Schraubelement 52 jeweils in diskreten Abständen festgelegt werden. Dadurch kann ein Abstand der Längshaltefläche 34 zu einer Außenkante der Bodenfläche 30 variabel eingestellt werden. Wie in Fig. 3 gezeigt, kann beispielsweise die Längshaltefläche 34 unmittelbar an die Bodenfläche 30 angrenzen. Dadurch wird auch eine kleine Tiertransportbox 38 in Längsrichtung sicher abgestützt. Fig. 1 zeigt dagegen eine Einstellung, bei welcher die Bodenfläche 30 von der Längshaltefläche 34 in Längsrichtung beabstandet ist. In diesem Fall kann die Transportguthaltevorrichtung 16 auch breitere Transportboxen 38 aufnehmen. Ebenso ist es möglich, die Rahmenkonstruktion 18 so einzustellen, dass sich deren Vorderseite an der vorderen Sitzreihe 12 rückseitig mit abstützt. So kann die Transportguthaltevorrichtung 16 besonders hohe Kräfte aufnehmen.

Das Stützelement 32 weist jeweilige Nuten 54 bzw. Schlitze auf, welche orthogonal in einer durch die Bodenfläche 30 definierten Ebene zu Nuten 56 bzw. Schlitzen in Querstreben 58 der Rahmenkonstruktion 18 angeordnet sind. Dies ermöglicht ein Verschieben des Stützelements 32 sowohl in Längsrichtung als auch in eine Querrichtung, wobei die Querrichtung beispielsweise in Fig. 1 durch Doppelpfeil 60 veranschaulicht ist und in den gezeigten Beispielen einer Fahrzeugquerrichtung entspricht. Auch eine Querstrebe 62 der Rahmenkonstruktion 18 weist eine Nut 82 bzw. einen Schlitz auf, mittels welcher eine Position des Längshalteelements 36 in die Querrichtung verstellbar ist. Das Längshalteelement 36 und das Stützelement 32 sind dabei über die jeweiligen Nuten 54, 56 und 82 mittels eines jeweiligen Spannelements 64 an der Rahmenkonstruktion 18 fixierbar. Durch die Positionsverschiebung des Stützelements 32 und des Längshalteelements 36 kann die Transportguthaltevorrichtung 16 an unterschiedlich große Transportgute und an unterschiedliche Innenraumplatzverhältnisse verschiedener Kraftfahrzeuge einfach angepasst werden.

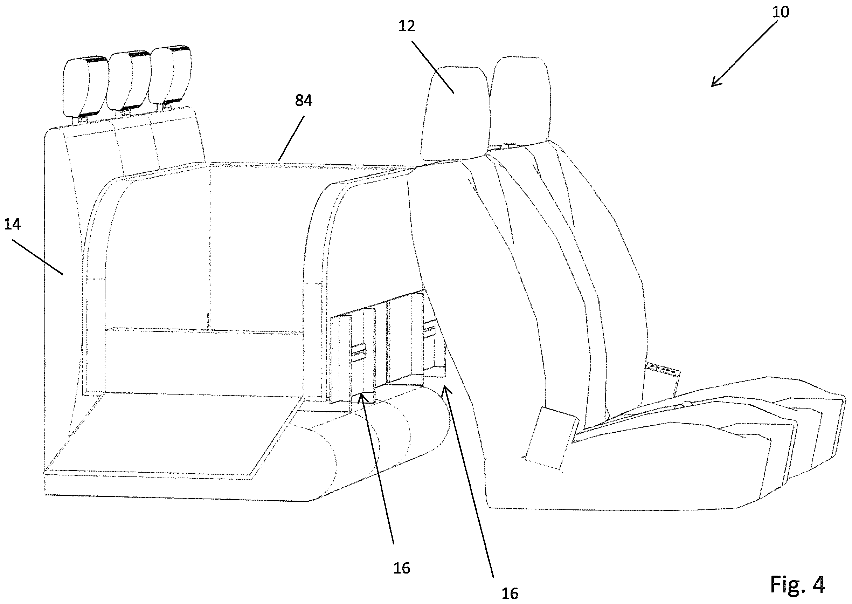

Aufgrund der beschriebenen Verschiebbarkeit können auch mehrere Transportguthaltevorrichtungen 16 nebeneinander angeordnet werden und dabei bündig aneinander angrenzend eingestellt werden, wie dies beispielsweise in der schematischen Perspektivansicht von Fig. 4 gezeigt ist. Dadurch kann auch eine große Tiertransportbox 84 von der Transportguthaltevorrichtung 16 sicher aufgenommen werden, welche sich über beispielsweise eine gesamte Rückbank des Kraftfahrzeugs erstreckt. Gegebenenfalls kann es dabei auch vorgesehen sein, dass zwischen zwei Transportguthaltevorrichtungen 16 noch ein Überbrückungselement eingehängt wird, um eine besonders große Bodenfläche 30 zur Verfügung zu stellen. In beiden Fällen ermöglicht die Positionsverstellung beispielsweise der Stützelemente 32 einen Toleranzausgleich.

Das Stützelement 32 kann dabei beispielsweise eine Breite von 20 bis 120 Zentimetern in Querrichtung aufweisen, insbesondere von 40 bis 80 Zentimetern. Ferner kann das Stützelement 32 beispielsweise eine Breite in Längsrichtung von 20 bis 80 Zentimetern aufweisen, vorzugsweise von 30 bis 50 Zentimetern. Das Längshalteelement 36 kann beispielsweise eine Breite in Querrichtung aufweisen, welche der des Stützelements 32 entspricht. Eine Breite des Längshalteelements 36 in Hochrichtung kann beispielsweise 5 bis 40 Zentimetern entsprechen, vorzugsweise 15 bis 30 Zentimetern. Die angegebenen Größen sind besonders geeignet zum Transport von Haustieren wie Hunden oder Katzen. Die Transportguthaltevorrichtung 16 ist in den gezeigten Beispielen in Querrichtung symmetrisch ausgebildet sein.

Zusätzlich zu dem Längshalteelement 36 an der Vorderseite 20 kann die Transportguthaltevorrichtung 16 auch ein ähnlich gestaltetes Längshalteelement an der Rückseite aufweisen, um beispielsweise eine Rücklehne des Fahrzeugsitzes 14 vor dem Transportgut zu schützen. Ebenso kann die Transportguthaltevorrichtung 16 jeweilige Querhalteelemente aufweisen, welche dazu ausgebildet sind, das Transportgut in der Querrichtung abzustützen. Dafür könnte die Rahmenkonstruktion 18 beispielsweise so ausgebildet sein, dass jeweilige Querhalteelemente seitlich in Querrichtung an der Rahmenkonstruktion 18 befestigt werden können.

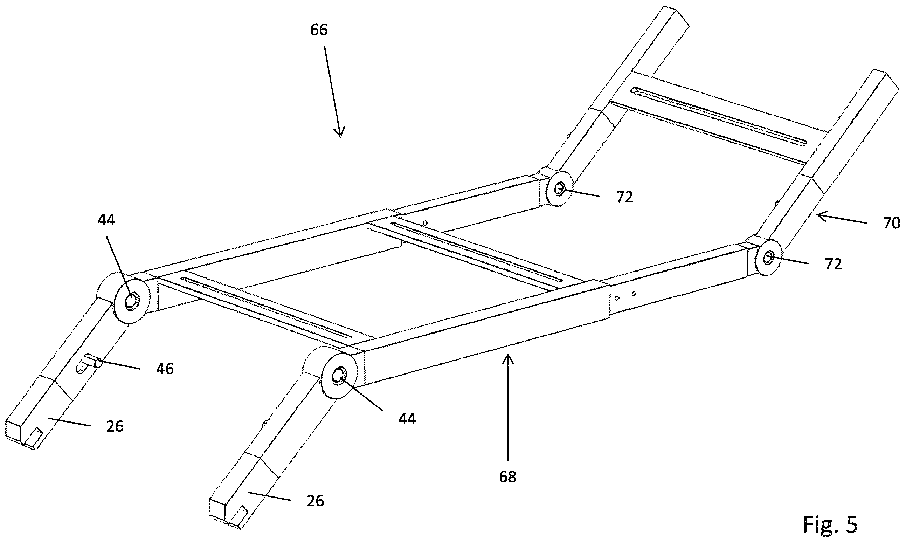

Fig. 5 zeigt in einer schematischen Perspektivansicht eine Transportguthaltevorrichtung 16 mit einer anders ausgeführten Rahmenkonstruktion 66. Die Rahmenkonstruktion 66 unterscheidet sich von der Rahmenkonstruktion 18 insbesondere dadurch, dass diese zwischen einem ersten Teil 68, welches zur Befestigung des Stützelements 32 ausgebildet ist, und einem zweiten Teil 70, welches zur Befestigung des Längshalteelements 36 ausgebildet ist, wenigstens ein zweites Gelenk 72 aufweist, mittels welchem eine Neigung der Längshaltefläche 34 gegenüber der Bodenfläche 30 um eine Drehachse, welche in Querrichtung verläuft, einstellbar ist. Dadurch kann die Transportguthaltevorrichtung 16 auch Tiertransportboxen mit schrägen Seitenwänden sicher aufnehmen. Alternativ kann beispielsweise auch lediglich eine Decke oder ähnliches zur Polsterung über die Transportguthaltevorrichtung 16 gelegt werden und die schräge Längshaltefläche 34 ermöglicht einem Tier, sich bequem dort aufzuhalten, nicht unähnlich zu einem Hundekörbchen.

Aufgrund des Gelenks 72 kann im Übrigen die Transportguthaltevorrichtung 16 so zusammengeklappt werden, dass das Längshalteelement 36 auf dem Stützelement 32 aufliegt. Dann kann die Transportguthaltevorrichtung 16 besonders platzsparend weggeräumt werden. Ebenso kann das Gelenk 44 so verdreht werden, dass die Befestigungselemente 26 an der Rahmenkonstruktion 18 anliegen. Auch dadurch wird der Stauraumbedarf der Transportguthaltevorrichtung 16 besonders klein.

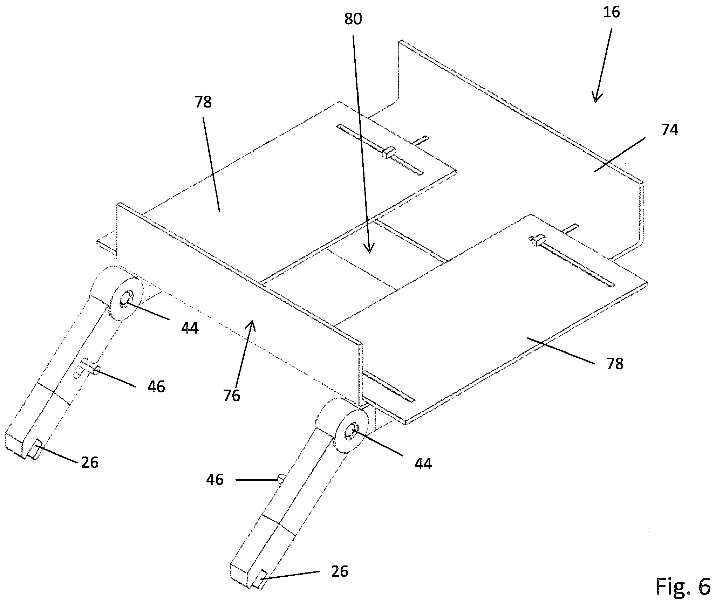

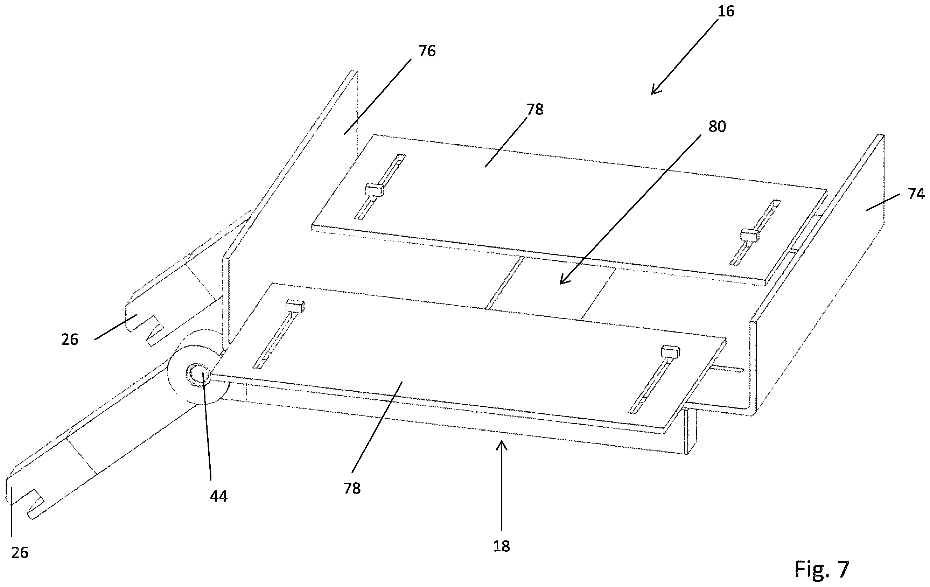

Fig. 6 und Fig. 7 zeigen in zwei unterschiedlichen schematischen Perspektivansichten eine weitere Ausführungsform der Transportguthaltevorrichtung 16. Das dort gezeigte Ausführungsbeispiel der Transportguthaltevorrichtung 16 weist ein winkliges Element 74 auf, welches sowohl einen Teil der Bodenfläche 30 als auch die Längshaltefläche 34 an der Vorderseite 20 bildet. Dadurch kann insbesondere auf eine Rahmenkonstruktion verzichtet werden, welche zum Halten sowohl des Stützelements 32 als auch des Längshalteelements 36 L-förmig ausgebildet ist. Das Elemente 74 bildet also sowohl ein Längshalteelement als auch ein Stützelement. Dadurch ist die Anzahl der Teile der Transportguthaltevorrichtung 16 gemäß Fig. 6 und Fig. 7 besonders gering. Zudem weist die in Fig. 6 gezeigte Ausführungsform der Transportguthaltevorrichtung 16 auch eine Längshaltefläche 76 an der Rückseite 22 auf, welche hier ebenfalls durch ein Element gebildet ist, welches auch einen Teil der Bodenfläche 30 bildet. Weiterhin weist die Transportguthaltevorrichtung 16 gemäß Fig. 6 zwei weitere Elemente 78 auf, welche ebenfalls einen Teil der Bodenfläche 30 bilden und damit auch als Stützelemente bezeichnet werden können.

Alle die jeweiligen Fläche bildenden Elemente der Transportguthaltevorrichtung 16 gemäß Fig. 6 sind dabei relativ zueinander verschiebbar an der Rahmenkonstruktion 18 befestigt, wofür vorliegend erneut Spannelemente und Nuten vorgesehen sind. Durch ein Auseinanderziehen der Elemente 78 kann dabei eine effektive Bodenfläche 30 vergrößert werden. In diesem Fall ist die Transportguthaltevorrichtung 16 mit ihrer Bodenfläche 30 in Querrichtung vergrößert, sodass eine größere Tiertransportbox 38 aufgenommen werden kann und auch größere Momente von der Transportguthaltevorrichtung 16 abgestützt werden können. Dabei ist es nicht zwingend erforderlich, dass die tatsächliche Bodenfläche 30 vergrößert wird. Gegebenenfalls vergrößert sich nämlich ein Lochbereich 80 in der Mitte der Bodenfläche 30, welcher keine tatsächliche, physische Abstützfläche für darauf gelagertes Transportgut zur Verfügung stellt. Bei einer entsprechend steifen Unterseite des Transportgutes, wie diese beispielsweise durch die Tiertransportbox 38 zur Verfügung gestellt wird, ist jedoch eine durchgehende Abstützung von unten des Transportgutes nicht notwendig. Entsprechend kann die Bodenfläche 30 beispielsweise auch Löcher, Rasterungen oder dergleichen zur Gewichtsreduktion aufweisen. Eine Größenveränderung der Bodenfläche 30 kann lediglich einer effektiven, jeweilige von den Stützelementen eingeschlossenen Freiräume mit einschließenden, Flächenvergrößerung entsprechen, ohne dass eine tatsächliche physische Bodenfläche 30 vergrößert wird.

Das Element 74 ist in Hochrichtung zu den Elementen 78 wenigstens im Bereich der Bodenfläche 30 versetzt. Durch ein entsprechendes Auseinanderziehen beispielsweise in Längsrichtung kann somit in diesem Fall auch die tatsächliche Bodenfläche vergrößert werden. Eine entsprechende Stufe in der Bodenfläche 30 kann dabei beispielsweise durch eine Polsterung an der Unterseite des Transportgutes, wie diese beispielsweise die Tiertransportbox 38 aufweist, kompensiert werden.

Die Transportguthaltevorrichtung 16 ist dazu geeignet, in unterschiedlichen Kraftfahrzeugen mit unterschiedlichen Platzverhältnissen leicht eingebaut zu werden und kann dabei zudem leicht an unterschiedlich große und/oder unterschiedlich geformte Tiertransportboxen angepasst werden. Dabei ist ein sicherer und komfortabler Transport insbesondere von Haustieren wie Hunden und Katzen möglich.

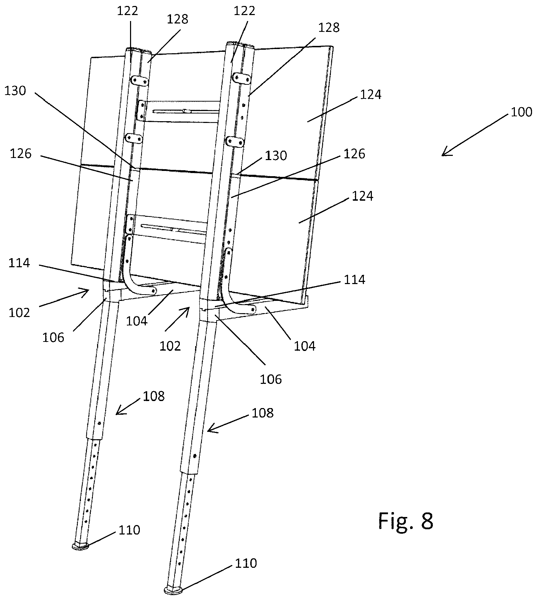

Fig. 8 zeigt eine Transportguthaltevorrichtung 100, welche sich von den anderen beschriebenen Transportguthaltevorrichtungen insbesondere durch zwei Adaptervorrichtungen 102 unterscheidet. Abgesehen von diesen zwei Adaptervorrichtungen 102 und damit verbundenen zusätzlichen Teilen kann die Transportguthaltevorrichtung 100 identisch oder zumindest ähnlich zu den vorher beschriebenen Transportguthaltevorrichtungen ausgebildet sein. Aus diesem Grund und zur Vereinfachung der Darstellung ist z. B. bei der Transportguthaltevorrichtung 100 in der Fig. 8 ein die Bodenfläche ausbildendes Stützelement nicht dargestellt.

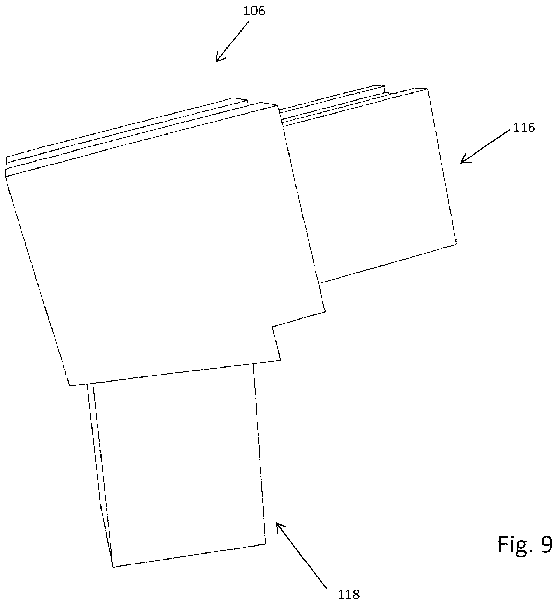

Im in Fig. 8 gezeigten Beispiel der Transportguthaltevorrichtung 100 sind die beiden Adaptervorrichtungen 102 jeweils an einem ersten Rahmenteil 104 seiner Rahmenkonstruktion befestigt, an welchem ein die Bodenfläche ausbildendes Stützelement befestigt sein kann. Die beiden ersten Rahmenteile 104 sind dabei als Vierkanthohlprofil ausgebildet, in welchem ein erstes Adapterelement 106 der jeweiligen Adaptervorrichtung 102 eingesteckt ist. Das erste Adapterelement 106 ist dabei in der schematischen Perspektivansicht gemäß Fig. 9 im Detail gezeigt. Weiterhin ist an dem ersten Adapterelement 106 ein in Fahrzeughochrichtung nach unten verlaufender Stützfuß 108 angeordnet, welcher zwei teleskopisch zur Längsstellung ineinander verschiebbare Rohrelemente umfasst. Die Länge des Stützfußes 108 kann dabei jeweils durch einen Stift in diskreten Abständen festgelegt werden. Dadurch kann die Länge des Stützfußes 108 einfach an eine jeweilige Sitzhöhe angepasst werden, in welcher die Transportguthaltevorrichtung 100 befestigt ist. Der Stützfuß 108 kann dabei auch als Teil einer standardisierten Isofix-Befestigungsvorrichtung mit Stützfuß ausgebildet sein. Dadurch können besonders hohe Lasten durch die Transportguthaltevorrichtung 100 abgestützt werden.

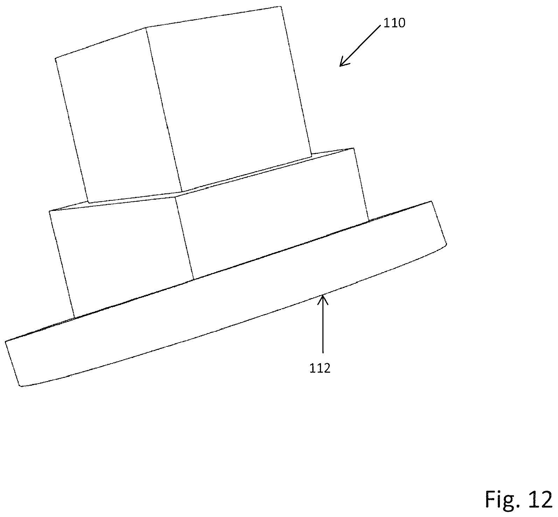

An seiner Unterseite umfasst der Stützfuß 108 dabei ein Stützfußelement 110, mittels welchem die Transportguthaltevorrichtung 100 an dem Fahrzeuginnenboden abstützbar ist. Das Stützfußelement 110 ist dabei im Detail in der schematischen Perspektivansicht gemäß Fig. 12 gezeigt. Dabei ist zu erkennen, dass eine Stützfußbodenfläche 112 des Stützfußelements 110 einen Winkel zu einer Haupterstreckungsrichtung des Stützfußes 108 ausbildet, welcher leicht von einem rechten Winkel abweicht. Dadurch können mittels des Stützfußes 108 auch jeweilige Kräfte in Längsrichtung und nicht nur in Hochrichtung gut abgestützt werden. Zudem kann so der Stützfuß 108 in einen Mittenbereich des Fahrzeuginnenbodens eines Fußraumes reichen und somit die Transportguthaltevorrichtung 100 besonders einfach an dem Fahrzeugsitz anordenbar sein.

Optional kann das Stützfußelement 110 mit den jeweiligen Rohrteilen des Stützfußes 108 mittels eines Gelenks verbunden sein, um Unebenheiten bzw. ungewöhnliche Winkel des Fahrzeuginnenbodens zulassen zu können und dennoch eine sichere Abstützung zu gewährleisten.

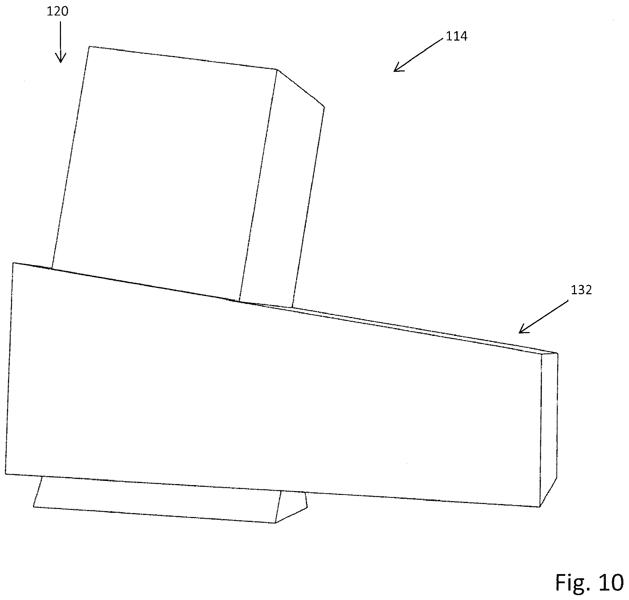

Weiterhin umfasst die Adaptervorrichtung 102 ein zweites Adapterelement 114, welches nicht an den ersten Rahmenteilen 104, sondern direkt an dem ersten Adapterelement 106 mittels einer Schwalbenschwanzverbindung befestigt ist. Das zweite Adapterelement 114 ist dabei im Detail in der schematischen Perspektivansicht gemäß Fig. 10 zu erkennen.

Wie in den Figuren 9 und 10 zu erkennen ist, ist das zweite Adapterelement 114 an dem ersten Adapterelement 106 mittels der Schwalbenschwanzverbindung ansteckbar. Dadurch können die beiden Adapterelemente 106, 114 schnell und einfach miteinander lösbar verbunden werden. Das erste Adapterelement 106 weist dabei einen ersten Endbereich 116 auf, welcher mittels eines Reibschlusses in dem ersten Rahmenteil 104 eingesteckt ist. Dafür kann beispielsweise zur Nachrüstung von dem ersten Rahmenteil 104 eine Endkappe entnommen werden und stattdessen das erste Adapterelement 106 eingesteckt werden. Weiterhin weist das erste Adapterelement 106 einen zweiten Endbereich 118 auf, an welchem der Stützfuß 108 ansteckbar ist. Eine Haupterstreckungsrichtung des ersten Endbereich 116 und des zweiten Endbereich 118 bildet dabei dazwischen einen Winkel aus, welcher geringfügig größer als ein rechter Winkel ist, so dass sich der Stützfuß 108 mit einer gewissen Neigung abweichend von der Vertikalen in den Fahrzeuginnenboden erstreckt.

Das zweite Adapterelement 114 weist einen ersten Endbereich 120 auf, in dem ein zweites Rahmenteil als Verlängerungselement 122 befestigt ist bzw. befestigt werden kann, beispielsweise durch Aufstecken und/oder mittels eines Reibschlusses. Alternativ oder zusätzlich zu den vorher beschriebenen Befestigungen können die jeweiligen Rahmenteile auch mit den Adapterelementen verschraubt sein. Dann ist die Verbindung besonders sicher.

Weiterhin weist das zweite Adapterelement 114 einen zweiten Endbereich 132 auf, welcher in Fahrzeughochrichtung einen Teilbereich eines ersten Rahmenteils 104 überdeckt, wie dies in Fig. 8 zu erkennen ist. Der zweite Endbereich 132 erlaubt damit eine zusätzliche Abstützung des zweiten Adapterelements 114 an dem ersten Rahmenteil 104 und damit eine zusätzliche Abstützung des Verlängerungselements 122. Gleichzeitig bewirkt dieser zweite Endbereich 132 des zweiten Adapterelements 114 eine Selbstverkeilung der Adaptervorrichtung 102 an dem ersten Rahmenteil 104. Dadurch ist die Adaptervorrichtung 102 besonders sicher und einfach an der restlichen Rahmenkonstruktion der Transportguthaltevorrichtung 100 befestigt. Insbesondere kann die Adaptervorrichtung 102 vorzugsweise nur von der Rahmenkonstruktion bzw. dem ersten Rahmenteil 104 gelöst werden, indem zunächst das zweite Adapterelement 114 von dem ersten Adapterelement 106 abgezogen wird.

Wie weiterhin zu erkennen ist, weist die Transportguthaltevorrichtung 100 zwei Längshalteelemente 124 auf, welche in Fahrzeughochrichtung im Wesentlichen bündig übereinander angeordnet sind und gemeinsam eine Längshaltefläche ausbilden, welche im Wesentlichen eben ist. Das obere der beiden Längshalteelemente 124 ist dabei mittels des Verlängerungselements 122 an der restlichen Rahmenkonstruktion der Transportguthaltevorrichtung 100 gehalten. Dadurch kann eine vergrößerte Längshaltefläche bereitgestellt werden, beispielsweise an einer Vorderseite der Transportguthaltevorrichtung, um auch besonders große Transportgüter, wie beispielsweise große Tiertransportboxen sicher halten zu können. Aufgrund der Adaptervorrichtung 102 können dabei sowohl der Stützfuß 108 als auch das Verlängerungselement 122 modular und nachträglich leicht nachgerüstet werden.

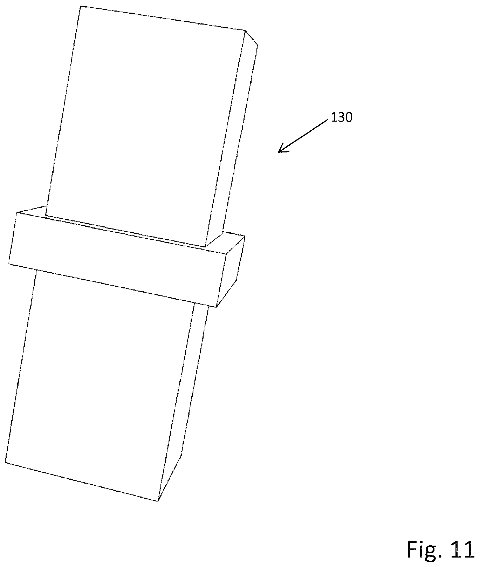

Die beiden Längshalteelemente 124 können dabei identisch ausgebildet sein und insbesondere den bereits vorher beschriebenen Längshalteelementen der anderen Ausführungsformen der Transportguthaltevorrichtung entsprechen. Das untere der beiden Längshalteelemente 124 weist dabei zwei Rahmenteile 126 auf, welche jeweils mittels eines Gelenks an dem ersten Rahmenteil 104 befestigt sind. Das obere der beiden Längshalteelemente 124 weist ebenso zwei, vorzugsweise identische, Rahmenteile 128 auf, welche jeweils mittels eines Verbindungselements 130 mit dem Rahmenteil 126 verbunden sind. Das Verbindungselement 130 ist dabei im Detail in der schematischen Perspektivansicht gemäß Fig. 11 gezeigt. Hierbei kann es sich beispielsweise um ein einfaches Profilteil oder Massivteil handeln, welches im jeweiligen zueinander zugewandten Ende der Rahmenteile 126 und 128 eingesteckt ist, um diese miteinander zu verbinden.

Zusätzlich sind die das obere der beiden die Längshalteelemente 124 haltenden Rahmenteile 128 jeweils mit einem der Verlängerungselemente 122 verbunden. Im vorliegenden Fall werden dafür jeweils beispielsweise zwei voneinander beabstandete Verschraubungen genutzt. Entsprechend kann jedes Verlängerungselement 122 das obere der beiden Längshalteelemente 124 stützen. Dadurch ist eine einfache und stabile Konstruktion geschaffen, welche zudem an bestehende Transportguthaltevorrichtungen leicht nachrüstbar sein kann. Gleichzeitig kann das untere der beiden Längshalteelemente 124 durch dessen relatives Drehen bezüglich des ersten Rahmenteils 104 eine Befestigung der Transportguthaltevorrichtung 100 von dem Fahrzeugsitz lösen. So kann die Transportguthaltevorrichtung 100 gelöst und entnommen werden, ohne dass dafür das zusätzliche, obere Längshalteelement 124 demontiert werden muss. Alternativ kann aber auch für eine besonders stabile Konstruktion das untere der beiden Längshalteelemente 124, ebenso wie das obere der beiden Längshalteelemente 124, mit dem Verlängerungselement 122 verbunden sein, beispielsweise mittels einer Verschraubung.

Die beiden Adapterelemente 106 und 114 bilden zusammen eine im Wesentlichen T-förmige Adaptervorrichtung 102. An den beiden Enden dieser Adaptervorrichtung 102 kann somit ein Stützfuß 108 und ein Verlängerungselement 122 befestigt werden. Dadurch können jeweilige Längs- und/oder Querhalteflächen der Transportguthaltevorrichtung 100 vergrößert werden und gleichzeitig eine Abstützung bereitgestellt werden, welche es der Transportguthaltevorrichtung 100 erlauben, höhere Kräfte abzustützen. Dadurch kann die Kapazität der Transportguthaltevorrichtung 100 einfach und modular gegenüber den anderen beschriebenen Ausführungsformen vergrößert werden, ohne dass es dabei zu einer Beeinträchtigung der Sicherheit kommen kann.

Die Adapterelemente 106, 114 und/oder das Verbindungselement 130 können beispielsweise als kostengünstige Spritzgußteile ausgebildet sein, beispielsweise aus einem Kunststoff oder einem Metall. Metall eignet sich zur Aufnahme hoher Lasten besonders gut während ein Kunststoffspritzgußteil besonders leicht sein kann.

### Bezugszeichenliste

- 10: Innenraum
- 12: Sitzreihe
- 14: Fahrzeugsitz
- 16: Transportguthaltevorrichtung
- 18: Rahmenkonstruktion
- 20: Vorderseite
- 22: Rückseite
- 24: Doppelpfeil
- 26: Befestigungselement
- 28: Doppelpfeil
- 30: Bodenfläche
- 32: Stützelement
- 34: Längshaltefläche
- 36: Längshalteelement
- 38: Tiertransportbox
- 40: Klappenelement
- 42: Öffnung
- 44: Gelenk
- 46: Arretierungselement
- 48: erstes Rahmenstück
- 50: zweites Rahmenstück
- 52: Schraubelement
- 54: Nut
- 56: Nut
- 58: Querstrebe
- 60: Doppelpfeil
- 62: Querstrebe
- 64: Spannelement
- 66: Rahmenkonstruktion
- 68: erstes Teil
- 70: zweites Teil
- 72: zweites Gelenk
- 74: winkliges Element
- 76: Längshaltefläche
- 78: Element
- 80: Lochbereich
- 82: Nut
- 84: Tiertransportbox
- 100: Transportguthaltevorrichtung
- 102: Adaptervorrichtung
- 104: erstes Rahmenteil
- 106: erstes Adapterelement
- 108: Stützfuß
- 110: Stützfußelement
- 112: Stützfußoberfläche
- 114: zweites Adapterelement
- 116: Endbereich
- 118: Endbereich
- 120: Endbereich
- 122: Verlängerungselement
- 124: Längshalteelement
- 126: Rahmenteil
- 128: Rahmenteil
- 130: Verbindungselement
- 132: Endbereich

## Patentansprüche

1. Transportguthaltevorrichtung (16, 100) für den Transport eines Transportguts, insbesondere einer Transportvorrichtung (38, 84) für Tiere, in einem Innenraum eines Kraftfahrzeugs,
mit einer Rahmenkonstruktion (18, 66) und mit einer Vorderseite (20) und einer dieser gegenüberliegenden Rückseite (22), welche eine Längsrichtung (24) definieren, wobei an der Rückseite (22) an der Rahmenkonstruktion (18, 66) wenigstens ein Befestigungselement (26) angeordnet ist, welches dazu ausgebildet ist, die Transportguthaltevorrichtung (16) lösbar an einem Fahrzeugsitz des Kraftfahrzeugs zu befestigen wenn die Transportguthaltevorrichtung auf dem Fahrzeugsitz (14) angeordnet ist,
wobei die Transportguthaltevorrichtung (16) ferner wenigstens ein eine Bodenfläche (30) ausbildendes Stützelement (34, 74, 78) aufweist, welches an der Rahmenkonstruktion (18, 66), bevorzugt lösbar, befestigt ist,
wobei die Transportguthaltevorrichtung (16) an ihrer Vorderseite (26) ferner wenigstens ein eine Längshaltefläche (34) ausbildendes Längshalteelement (36, 74, 124) aufweist, welches an der Rahmenkonstruktion (18, 66), bevorzugt lösbar, befestigt ist,
und wobei das wenigstens eine Befestigungselement (26) mit der Rahmenkonstruktion (18, 66) mittels wenigstens eines Gelenks (44) verbunden ist.

2. Transportguthaltevorrichtung (16) nach Anspruch 1, wobei
die Transportguthaltevorrichtung (16) wenigstens ein eine Querhaltefläche ausbildendes Querhalteelement aufweist, welches an der Rahmenkonstruktion (18, 66), bevorzugt lösbar, befestigt ist und/oder
die Transportguthaltevorrichtung (16) an ihrer Rückseite (22) wenigstens ein eine zweite Längshaltefläche (76) ausbildendes zweites Längshalteelement aufweist, welches an der Rahmenkonstruktion (18, 66), bevorzugt lösbar, befestigt ist.

3. Transportguthaltevorrichtung (16) nach einem der Ansprüche 1 oder 2, wobei
die Größe der Bodenfläche (30) und/oder die Größe der Längshaltefläche (34, 76) und/oder die Größe der Querhaltefläche variabel einstellbar sind.

4. Transportguthaltevorrichtung (16) nach Anspruch 3, wobei
die Bodenfläche (30) durch wenigstens zwei Stützelemente (76) gemeinsam gebildet ist, welche jeweils zur Größeneinstellung der Bodenfläche (30) in eine Querrichtung (60) und/oder in die Längsrichtung (24) relativ zueinander verschiebbar sind und/oder
die Längshaltefläche (34, 76) durch wenigstens zwei Längshalteelemente gemeinsam gebildet ist, welche jeweils zur Größeneinstellung der Längshaltefläche (34, 76) in die Querrichtung (60) und/oder in eine Hochrichtung (28) relativ zueinander verschiebbar befestigt sind und/oder
die Querhaltefläche durch wenigstens zwei Querhalteelemente gemeinsam gebildet ist, welche jeweils zur Größeneinstellung der Querhaltefläche in die Längsrichtung (24) und/oder in die Hochrichtung (28) relativ zueinander verschiebbar befestigt sind.

5. Transportguthaltevorrichtung (16) nach Anspruch 4, wobei
eine Position wenigstens eines der Haltelemente (36, 74) und/oder der Stützelemente (32, 74, 78) mittels eines Spannelements (64) lösbar festgelegt ist, wobei das Spannelement (64) in einer ersten Nut (56, 82) in einem Rahmenelement (58, 62) der Rahmenkonstruktion (18, 66) und in einer zweiten Nut (54) in dem wenigstens einen Haltelement (36, 74) oder dem wenigstens einen Stützelement (32, 78) beweglich angeordnet ist, wobei die zweite Nut (54) orthogonal zu der ersten Nut (56, 82) verläuft.

6. Transportguthaltevorrichtung (16) nach einem der vorherigen Ansprüche, wobei
das Gelenk (44), mittels welchem das wenigstens einen Befestigungselement (26) mit der Rahmenkonstruktion (18, 66) verbunden ist, ein Drehen des wenigstens einen Befestigungselements (26) und der Rahmenkonstruktion (18, 66) relativ zueinander um eine Drehachse erlaubt, welche im Wesentlichen in Querrichtung (60) verläuft.

7. Transportguthaltevorrichtung (16) nach einem der vorherigen Ansprüche, wobei
die Bodenfläche (30) und/oder die Längshaltefläche (34) und/oder die Querhaltefläche in ihren jeweiligen Positionen relativ zu dem wenigstens einen Befestigungselement (26) in Querrichtung (60) und/oder in Längsrichtung (24) und/oder in Hochrichtung (28) verschiebbar ist.

8. Transportguthaltevorrichtung (16) nach einem der vorherigen Ansprüche, wobei
die Rahmenkonstruktion (18, 66) zwischen einem ersten Teil (68), an welchem das wenigstens eine Stützelement (32, 74, 78) befestigt ist, und einem zweiten Teil (70), an welchem das wenigstens eine Längshaltelement (36) befestigt ist, wenigstens ein zweites Gelenk (72) aufweist, welches insbesondere ein Drehen der Bodenfläche (30) und der Längshaltefläche (36) relativ zueinander um eine Drehachse erlaubt, welche im Wesentlichen in Querrichtung (60) verläuft und/oder
die Rahmenkonstruktion (18, 66) zwischen dem ersten Teil (68), an welchem das wenigstens eine Stützelement (32, 74, 78) befestigt ist, und einem dritten Teil, an welchem das wenigstens eine Querhalteelement befestigt ist, wenigstens ein drittes Gelenk aufweist, welches insbesondere ein Drehen der Bodenfläche (30) und der Querhaltefläche relativ zueinander um eine Drehachse erlaubt, welche im Wesentlichen in Längsrichtung (24) verläuft.

9. Transportguthaltevorrichtung (16) nach einem der vorherigen Ansprüche, wobei
die Transportguthaltevorrichtung (16) eine Isofix-Befestigungsvorrichtung zum lösbaren Befestigen der Transportguthaltevorrichtung (16) an dem Fahrzeugsitz (14) umfasst, von der das wenigstens eine Befestigungselement (26) ein Teil ist.

10. Transportguthaltevorrichtung (100) nach einem der vorherigen Ansprüche, wobei
die Transportguthaltevorrichtung (100) wenigstens eine Adaptervorrichtung (102) umfasst, welche an der Vorderseite, Hinterseite oder Querseite, bevorzugt lösbar, an einem ersten Rahmenteil (104) der Rahmenkonstruktion befestigt ist, wobei an der Adaptervorrichtung (102) wenigstens ein zweites Rahmenteil, bevorzugt lösbar, befestigt ist.

11. Transportguthaltevorrichtung (100) nach Anspruch 10, wobei
das zweite Rahmenteil als ein Stützfuß (108) ausgebildet ist, mittels welchem die an dem Fahrzeugsitz befestigte Transportguthaltevorrichtung (100) auf einem Fahrzeuginnenboden abgestützt werden kann.

12. Transportguthaltevorrichtung (100) nach Anspruch 10, wobei
das zweite Rahmenteil als ein Verlängerungselement (122) ausgebildet ist, an dem ein zusätzliches Längshaltelement (124) oder Querhalteelement in Fahrzeughochrichtung über einem jeweiligen zugeordneten Längshaltelement (124) oder Querhalteelement, bevorzugt lösbar, befestigt ist, um mit diesem jeweiligen zugeordneten Längshalteelement (124) bzw. Querhalteelement gemeinsam die jeweilige Längshaltefläche bzw. Querhaltefläche auszubilden.

13. Transportguthaltevorrichtung (100) nach Anspruch 12, wobei
das Verlängerungselement (122) zusätzlich mit einem das zugeordnete Längshalteelement (124) oder Querhalteelement haltenden Rahmenteil (126), bevorzugt lösbar, befestigt ist.

14. Transportguthaltevorrichtung (100) nach Anspruch 12 oder 13, wobei
an dem zusätzlichen Längshalteelement (124) oder Querhalteelement ein drittes Rahmenteil (128), bevorzugt lösbar, befestigt ist, welches an dem das jeweilige zugeordnete Längshalteelement (124) oder Querhalteelement haltenden Rahmenteil (126), bevorzugt lösbar, befestigt ist, insbesondere mittels eines Verbindungselements (130).

15. Transportguthaltevorrichtung (100) nach einem der Ansprüche 10 bis 14, wobei
an der Adaptervorrichtung (102) wenigstens ein viertes Rahmenteil, bevorzugt lösbar, befestigt ist, wobei das zweite Rahmenteil als der Stützfuß (108) und das vierte Rahmenteil als das Verlängerungselement (122) ausgebildet ist.
